# EUROPEAN PATENT SPECIFICATION

(11) **EP 3 128 314 B1**
(45) Date of publication and mention of the grant of the patent: **31.03.2021**
(21) Application number: 16182403.2
(22) Date of filing: 02.08.2016
(51) Int. Cl.: B07C 5/10, G01N 21/84, B29C 31/00, G01N 21/952

(54) **AUTOMATIC INSPECTION PLATFORM**
AUTOMATISCHE INSPEKTIONSPLATFORM
PLATE-FORME D'INSPECTION AUTOMATIQUE

(30) Priority: 04.08.2015 CN 201510470405
(43) Date of publication of application: 08.02.2017
(73) Proprietor: Tyco Electronics (Shanghai) Co. Ltd., Shanghai (CN); TE Connectivity Corporation, Berwyn, PA 19312 (US)
(72) Inventor: XIN, Liming, Shanghai (CN); ZHOU, Lei, Shanghai (CN); HU, Lvhai, Shanghai (CN); ZHANG, Dandan, Shanghai (CN); LU, Roberto Francisco-Yi, Berwyn, PA 19312 (US); DENG, Yingcong, Shanghai (CN)
(74) Representative: Grünecker Patent- und Rechtsanwälte PartG mbB

(56) References cited:
- EP-A1- 2 653 395
- EP-A2- 2 170 416
- JP-A- H06 126 813
- US-A- 3 843 316
- US-A- 3 959 065
- US-A- 5 415 721
- US-A- 6 165 395
- US-A1- 2005 259 860
- US-A1- 2011 260 350
- US-A1- 2012 018 925
- US-A1- 2015 147 500

## Description

### BACKGROUND OF THE INVENTION

### Field of the Invention

The present invention relates to an automatic inspection platform configured to inspect defects of a tubular member on line, more particularly, relates to an automatic inspection platform configured to inspect defects of a heat shrinkable tube on line.

### Description of the Related Art

Heat shrinkable tube is one of the important products widely used in the automotive industry. So far, there is no visual inspection system for performing online automatic inspection on the quality of the heat shrinkable tube. At present, the appearance and size of heat shrinkable tube are inspected manually.

Manual inspection on the quality of the heat shrinkable tube has many disadvantages of: the stability of the manual inspection is low, the different inspectors may make different inspection results; the manual inspection is very time consuming, the inspectors need to carefully watch all parts of each heat shrinkable tube.

In addition, since the heat shrinkable tubes are often produced on line with very high productivity, the inspecting time for the inspector is relatively short. Generally, the time for the inspector to inspect each heat shrinkable tube is not more than 0.2 seconds. The inspector must complete the inspection of each heat shrinkable tube in a very short period of time, the work intensity of inspector is very large. The additional disadvantage of manual inspection is that the inspection accuracy is very poor. Because the time for inspecting each heat shrinkable tube is less than 0.2 seconds, it is very difficult to complete the whole inspection items (generally more than 10 inspection items) in such short period of time. Thereby, the inspector often focuses only on several important inspection items, and gives up other less important inspection items, which will inevitably cause the inspection result inaccurate.

Systems for automatic inspections are known in the prior art. For example, US 2005/0259860 A1 is related to a method and device for inspecting work pieces such as plastic bottles. The bottles are held by transport mandrels that are transported along a conveying system. During movement of the bottles, an inspection camera inspects the bottles when passing the camera. In EP 2 653 395 A1, a bottle filling system is disclosed, in which bottles are held on their bottle caps and transported along a transport path. During transportation, the bottles are inspected by cameras. US 6,165,395 A is related to manufacturing thermoplastic tubes. The tubes are moved on a rotating table, wherein the tubes pass several stations at which process steps are performed on the tubes, including inspection of the same. Another system for processing bottles is disclosed in US 3,843,316 A. Bottles are fixated with grippers that move along a cam track. During movement of the bottles, the same are provided with plastic sleeves.

From WO 2008/156920 A2, a system and method for coating stents is known. The system comprises cameras and several robotic devices for moving the stents with respect to the cameras in order to provide different views on the stents.

### SUMMARY OF THE INVENTION

The present invention has been made to overcome or alleviate at least one aspect of the above mentioned disadvantages. This object is achieved by the automatic inspection platform according to claim 1.

This automatic inspection platform improves the inspection accuracy, the inspection efficiency and the inspection reliability of a tubular member, for example, a heat shrinkable tube.

The automatic inspection platform comprises: a supplying mechanism configured to supply a tubular member to be inspected; a vision detector configured to inspect defects of the tubular member; and a conveying mechanism configured to convey the tubular member to a vision inspection location, so as to inspect the tubular member by means of the vision detector.

The tubular member is a heat shrinkable tube.

The automatic inspection platform further comprises: a clamping mechanism configured to clamp one end of the heat shrinkable tube; and a heating mechanism configured to heat the other end of the heat shrinkable tube, so that the other end of the heat shrinkable tube is shrunk.

The conveying mechanism comprises an annular conveying mechanism configured to convey the clamping mechanism and the heat shrinkable tube clamped on the clamping mechanism.

According to another exemplary embodiment of the present invention, the clamping mechanism comprises: an installation plate, one end of which is mounted on the annular conveying mechanism, configured to move with the annular conveying mechanism; and a fixture mounted on the other end of the installation plate and configured to be opened or closed, so as to clamp or release the heat shrinkable tube.

According to another exemplary embodiment of the present invention, the automatic inspection platform further comprises: a loading mechanism configured to insert the heat shrinkable tube supplied from the supplying mechanism into the fixture of the clamping mechanism.

According to another exemplary embodiment of the present invention, the loading mechanism comprises: a rotary table having a slope top surface; a stationary table provided above the rotary table; and a plurality of lifting posts slidably mounted in installation holes formed in the stationary table, respectively. Lower ends of the plurality of lifting posts are supported on the slope top surface of the rotary table. When the rotary table rotates about a vertical axis, the lifting post is gradually lifted along the slope top surface by the rotary table and inserts the heat shrinkable tube into the fixture of the clamping mechanism.

According to another exemplary embodiment of the present invention, the clamping mechanism further comprises a state switch button; when the state switch button is pressed, the fixture is switched from a closed state to an opened state, so that the heat shrinkable tube is capable of being inserted into the fixture; and when the state switch button is released, the fixture is switched from the opened state to the closed state, so as to fix the heat shrinkable tube on the fixture.

According to another exemplary embodiment of the present invention, the automatic inspection platform further comprises: a first pressing plate configured to press the state switch button. During inserting the heat shrinkable tube into the fixture, the first pressing plate presses the state switch button, so that the heat shrinkable tube is capable of being inserted into the fixture. After inserting the heat shrinkable tube into the fixture, the first pressing plate releases the state switch button, so as to fix the heat shrinkable tube on the fixture.

The vision detector comprises a first camera located at the annular conveying mechanism, provided to face the other end of the heat shrinkable tube, and configured to inspect a first defect on the heated and shrunk other end of the heat shrinkable tube.

According to another exemplary embodiment of the present invention, the first camera is used to inspect an eccentric defect of an inner hole of the heated and shrunk other end of the heat shrinkable tube.

The vision detector further comprises a second camera located at the annular conveying mechanism, provided to face the other end of the heat shrinkable tube, and configured to inspect a second defect on the heated and shrunk other end of the heat shrinkable tube.

According to another exemplary embodiment of the present invention, the second camera is used to inspect a diameter deviation of the inner hole of the heated and shrunk other end of the heat shrinkable tube and contaminants on an inner wall of the heated and shrunk other end of the heat shrinkable tube.

According to another exemplary embodiment of the present invention, the automatic inspection platform further comprises: a second pressing plate configured to press the state switch button. After the heat shrinkable tube has been inspected by the first camera and the second camera, the second pressing plate presses the state switch button, so as to switch the fixture from the closed state to the opened state, so that the heat shrinkable tube falls down from the fixture.

The conveying mechanism further comprises a rolling mechanism; the rolling mechanism comprises a plurality of rollers arranged in a row and spaced from each other and a driving device configured to drive the plurality of rollers to roll. The heat shrinkable tube is adapted to be supported on two adjacent rollers. After the state switch button is pressed by the second pressing plate, the heat shrinkable tube falls down from the fixture and is guided to a location between a first roller and a second roller of the rolling mechanism and supported on the adjacent first and second rollers.

The vision detector further comprises a third camera located at the rolling mechanism, provided to face outer peripheral surfaces of the rollers, and configured to inspect a defect on an outer peripheral surface of the heat shrinkable tube supported on two adjacent rollers. The rollers are adapted to rotate the heat shrinkable tube supported thereon to different angle positions, so that the third camera is capable of inspecting whole outer peripheral surface of the heat shrinkable tube.

According to another exemplary embodiment of the present invention, the vision detector further comprises a fourth camera located at the rolling mechanism, provided to face end surfaces of the rollers, and configured to inspect a defect on the one end of the heat shrinkable tube supported on two adjacent rollers.

According to another exemplary embodiment of the present invention, the driving device comprises: a plurality of worm wheels connected to the rollers, respectively; an endless screw engaged with the plurality of worm wheels; and a motor configured to drive the endless screw to rotate. When the endless screw is rotated by the motor, the endless screw drives the worm wheels to rotate, the worm wheels drive the rollers to rotate, and the rollers drive the heat shrinkable tube supported thereon to rotate.

According to another exemplary embodiment of the present invention, the automatic inspection platform further comprises: a moving carrier configured to move the heat shrinkable tube, which has been inspected by the third and fourth cameras, to an unloading location and convey the heat shrinkable tube, which is being inspected by the third and fourth cameras, to inspection locations between the rollers.

According to another exemplary embodiment of the present invention, the plurality of rollers of the rolling mechanism comprises the first roller, the second roller, a third roller and a fourth roller arranged in parallel in a row from one side to the other side; a first inspection location is defined between the first roller and the second roller, a second inspection location is defined between the second roller and the third roller, and a third inspection location is defined between the third roller and the fourth roller; and the moving carrier is adapted to move the heat shrinkable tube supported on the first inspection location between the first and second rollers to the second inspection location, the third inspection location and the fourth inspection location, successively.

According to another exemplary embodiment of the present invention, the heat shrinkable tube supported on the first inspection location is positioned at a first angle position; the heat shrinkable tube supported on the second inspection location is rotated from the first angle position to a second angle position; and the heat shrinkable tube supported on the third inspection location is rotated from the second angle position to a third angle position.

According to another exemplary embodiment of the present invention, an angle difference between the first angle position and the second angle position is equal to 120 degrees, and an angle difference between the second angle position and the third angle position is equal to 120 degrees.

According to another exemplary embodiment of the present invention, the moving carrier comprises a base and two supporting sidewalls provided at both sides of the base, the supporting sidewall being formed with slots. The rollers are located between the two supporting sidewalls, and both ends of the heat shrinkable tube are adapted to be received and supported in slots of the two supporting sidewalls.

According to another exemplary embodiment of the present invention, the heat shrinkable tube automatically falls down from the moving carrier due to the gravity when the heat shrinkable tube is moved to the unloading location.

According to another exemplary embodiment of the present invention, the rolling mechanism further comprises a holding member configured to hold the heat shrinkable tube at the first inspection location, the second inspection location and the third inspection location, so as to prevent the heat shrinkable tube from falling down from the rollers.

According to another exemplary embodiment of the present invention, the holding member comprises a piece of supporting plate, the supporting plate being provided to face the other ends inclined downward of the rollers, so as to support the other end of the heat shrinkable tube, which is inclined downward.

According to another exemplary embodiment of the present invention, the third camera is used to inspect a length deviation of the heated and shrunk other end of the heat shrinkable tube, a total length deviation of the heat shrinkable tube, a deformation defect of the heat shrinkable tube, or other defects, such as, holes, pits, burn marks, scratches or imprints, on an outer peripheral surface of the heat shrinkable tube.

According to another exemplary embodiment of the present invention, the fourth camera is used to inspect pits in an inner wall of the unheated and unshrunk one end of the heat shrinkable tube and an inner diameter deviation of the unheated and unshrunk one end of the heat shrinkable tube.

According to another exemplary embodiment of the present invention, the heat shrinkable tube fallen down from the fixture is guided by means of a guiding sleeve to the first inspection location between the first roller and the second roller.

The automatic inspection platform further comprises: a clamping mechanism configured to clamp one end of the heat shrinkable tube; and a heating mechanism configured to heat the other end of the heat shrinkable tube, so that the other end of the heat shrinkable tube is shrunk.

The conveying mechanism comprises an annular conveying mechanism configured to convey the clamping mechanism and the heat shrinkable tube clamped on the clamping mechanism.

According to another exemplary embodiment of the present invention, the clamping mechanism comprises: an installation plate, one end of which is mounted on the annular conveying mechanism, configured to move with the annular conveying mechanism; and a ferrule mounted on the other end of the installation plate and configured to be expanded outward. After being inserted into an inner hole of the heat shrinkable tube, the ferrule is expanded outward and abuts against the inner wall of the heat shrinkable tube, so as to hold the heat shrinkable tube on the ferrule.

According to another exemplary embodiment of the present invention, the automatic inspection platform further comprises: a loading mechanism configured to insert the heat shrinkable tube supplied from the supplying mechanism into the ferrule of the clamping mechanism.

According to another exemplary embodiment of the present invention, the loading mechanism comprises: a rotary table having a slope top surface; a stationary table provided above the rotary table; and a plurality of lifting posts slidably mounted in installation holes formed in the stationary table, respectively. Lower ends of the plurality of lifting posts are supported on the slope top surface of the rotary table. When the rotary table rotates about a vertical axis, the lifting post is gradually lifted along the slope top surface by the rotary table and inserts the heat shrinkable tube onto the ferrule of the clamping mechanism.

According to another exemplary embodiment of the present invention, the clamping mechanism further comprises a state switch button; when the state switch button is pressed, the ferrule is switched from an expanded state to a retracted state, so that the heat shrinkable tube is capable of being inserted onto the ferrule. When the state switch button is released, the ferrule is switched from the retracted state to the expanded state, so as to hold the heat shrinkable tube on the ferrule.

According to another exemplary embodiment of the present invention, the automatic inspection platform further comprises: a first pressing plate configured to press the state switch button. During inserting the heat shrinkable tube onto the ferrule, the first pressing plate presses the state switch button, so that the heat shrinkable tube is capable of being inserted onto the ferrule; and after inserting the heat shrinkable tube onto the ferrule, the first pressing plate releases the state switch button, so as to hold the heat shrinkable tube on the ferrule.

The vision detector comprises a first camera located at the annular conveying mechanism, provided to face the other end of the heat shrinkable tube, and configured to inspect a first defect on the heated and shrunk other end of the heat shrinkable tube.

According to another exemplary embodiment of the present invention, the first camera is used to inspect an eccentric defect of an inner hole of the heated and shrunk other end of the heat shrinkable tube.

The vision detector further comprises a second camera located at the annular conveying mechanism, provided to face the other end of the heat shrinkable tube, and configured to inspect a second defect on the heated and shrunk other end of the heat shrinkable tube.

According to another exemplary embodiment of the present invention, the second camera is used to inspect a diameter deviation of the inner hole of the heated and shrunk other end of the heat shrinkable tube and contaminants attached on an inner wall of the heated and shrunk other end of the heat shrinkable tube.

According to a not-claimed example, the ferrule is rotatably mounted on the installation plate; the clamping mechanism further comprises a gear fixed to the ferrule; and the automatic inspection platform further comprises a rack engaged with the gear and configured to drive the ferrule and the heat shrinkable tube on the ferrule to rotate about an axis of the heat shrinkable tube.

According to another not-claimed example, the vision detector further comprises a third camera located at the annular conveying mechanism, provided to face an outer peripheral surface of the heat shrinkable tube, and configured to inspect a third defect on the outer peripheral surface of the heat shrinkable tube. When the heat shrinkable tube is inspected by the third camera, the rack drives the heat shrinkable tube on the ferrule to rotate, so that the third camera is capable of inspecting whole outer peripheral surface of the heat shrinkable tube.

According to another not-claimed example, the third camera is used to inspect a length deviation of the heated and shrunk other end of the heat shrinkable tube, a total length deviation of the heat shrinkable tube, a deformation defect of the heat shrinkable tube, or other defects, such as, holes, pits, burn marks, scratches or imprints, on an outer peripheral surface of the heat shrinkable tube.

According to another not-claimed example, the automatic inspection platform further comprises: a second pressing plate configured to press the state switch button, wherein after the heat shrinkable tube has been inspected by the first camera, the second camera and the third camera, the second pressing plate presses the state switch button, so as to switch the ferrule from the expanded state to the retracted state, and so that the heat shrinkable tube falls down from the ferrule.

According to another not-claimed example, the conveying mechanism further comprises a rotating disk and a motor configured to drive the rotating disk to rotate about its axis. A radial receiving hole, adapted to receive the heat shrinkable tube therein, is formed in an outer peripheral wall of the rotating disk. After the state switch button is pressed by the second pressing plate, the heat shrinkable tube falls down from the ferrule and is guided into the radial receiving hole of the rotating disk.

According to another not-claimed example, the vision detector further comprises a fourth camera located at the rotating disk, provided to face an outer peripheral surface of the rotating disk, and configured to inspect a fourth defect on the unheated and unshrunk one end of the heat shrinkable tube.

According to another not-claimed example, the fourth camera is used to inspect pits in an inner wall of the unheated and unshrunk one end of the heat shrinkable tube and an inner diameter deviation of the unheated and unshrunk one end of the heat shrinkable tube.

According to another not-claimed example, the heat shrinkable tube falling down from the ferrule is guided by means of a guiding sleeve into the radial receiving hole of the rotating disk.

According to another exemplary embodiment of the present invention, the automatic inspection platform further comprises: a judgment device configured to determine whether the heat shrinkable inspected pipe is qualified based on inspection results of the vision detector.

According to another exemplary embodiment of the present invention, the automatic inspection platform further comprises: a sorting mechanism configured to place the qualified heat shrinkable tube into a first accommodate box and place the unqualified heat shrinkable tube into a second accommodate box.

According to another exemplary embodiment of the present invention, the sorting mechanism comprises: a passage located below the moving carrier and configured to receive the heat shrinkable heat fallen down from the moving carrier; a first branch passage selectively communicated with the passage and extending into the first accommodate box; a second branch passage selectively communicated with the passage and extending into the second accommodate box; and a shutter configured to selectively close the first branch passage or the second branch passage according to the judgment result of the judgment device. When the heat shrinkable tube is judged as a qualified product, the shutter close the second branch passage and open the first branch passage, so that the qualified heat shrinkable tube is capable of being guided into the first accommodate box through the first branch passage; and when the heat shrinkable tube is judged as an unqualified product, the shutter close the first branch passage and open the second branch passage, so that the unqualified heat shrinkable tube is capable of being guided into the second accommodate box through the second branch passage,

According to another exemplary embodiment of the present invention, the heat shrinkable tube automatically falls down under its gravity from the moving carrier into the passage when the heat shrinkable tube is moved to the unloading location, and automatically slides under its gravity into the first accommodate box or the second accommodate box through the first branch passage or the second branch passage.

According to another exemplary embodiment of the present invention, the automatic inspection platform further comprises: a judgment device configured to determine whether the heat shrinkable inspected pipe is qualified based on inspection results of the vision detector.

According to another exemplary embodiment of the present invention, the automatic inspection platform further comprises: a sorting mechanism configured to place the qualified heat shrinkable tube into a first accommodate box and place the unqualified heat shrinkable tube into a second accommodate box.

According to another exemplary embodiment of the present invention, the sorting mechanism comprises: a passage located below the rotating disk and configured to receive the heat shrinkable heat fallen down from the rotating disk; a first branch passage selectively communicated with the passage and extending into the first accommodate box; a second branch passage selectively communicated with the passage and extending into the second accommodate box; and a shutter configured to selectively close the first branch passage or the second branch passage according to the judgment result of the judgment device. When the heat shrinkable tube is judged as a qualified product, the shutter close the second branch passage and open the first branch passage, so that the qualified heat shrinkable tube is capable of being guided into the first accommodate box through the first branch passage; and when the heat shrinkable tube is judged as an unqualified product, the shutter close the first branch passage and open the second branch passage, so that the unqualified heat shrinkable tube is capable of being guided into the second accommodate box through the second branch passage,
According to another exemplary embodiment of the present invention, the heat shrinkable tube in the radial receiving hole automatically falls down under its gravity from the rotating disk into the passage when the radial receiving hole is rotated to be downward, and automatically slides under its gravity into the first accommodate box or the second accommodate box through the first branch passage or the second branch passage.

In the above exemplary embodiments of the present invention, the quality of the tubular member, for example, a heat shrinkable tube, is automatically inspected by the automatic inspection platform, instead of being inspected by eyes of inspectors, increasing the inspection accuracy, the inspection efficiency and the inspection reliability.

### BRIEF DESCRIPTION OF THE DRAWINGS

The above and other features of the present invention will become more apparent by describing in detail exemplary embodiments thereof with reference to the accompanying drawings, in which:
Fig.1 is an illustrative view of an automatic inspection platform for inspecting a heat shrinkable tube according to a first exemplary embodiment of the present invention;
Fig.2 is an illustrative view of a loading mechanism configured to insert a heat shrinkable tube supplied from a supplying mechanism into a fixture of a clamping mechanism of Fig. 1;
Fig.3 is an illustrative perspective view of a rolling mechanism and a moving carrier of Fig. 1;
Fig.4 is an illustrative side view of the rolling mechanism and the moving carrier of Fig.3;
Figs.5A-5Q show a process of inspecting an outer peripheral surface of the heat shrinkable tube by means of the rolling mechanism and a camera of Fig. 1, in which:

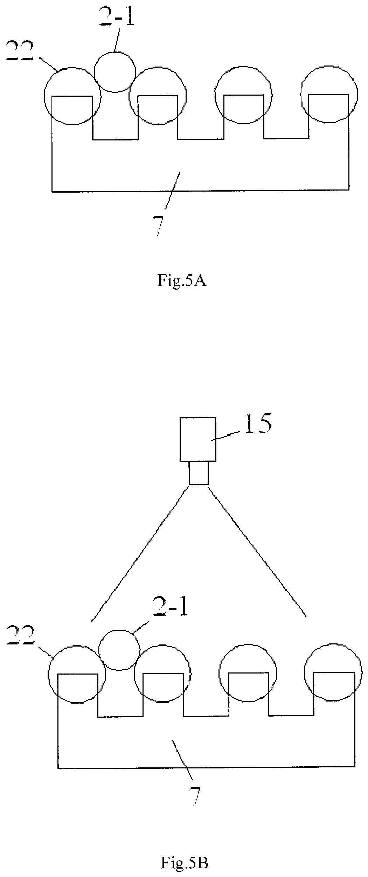

   Fig.5A is an illustrative view that a first heat shrinkable tube is loaded onto a first roller and a second roller of the rolling mechanism, in which the first heat shrinkable tube is supported at a first inspection location and is located at a first angle position;
   Fig.5B is an illustrative view that the outer peripheral surface of the first heat shrinkable tube supported on the first roller and the second roller is inspected by the camera;

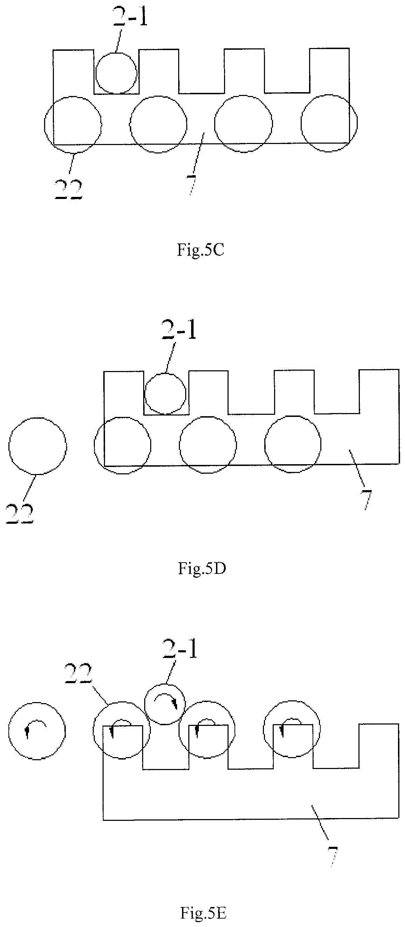

   Fig.5C is an illustrative view that the first heat shrinkable tube is lifted and supported by the moving carrier;
   Fig.5D is an illustrative view that the first heat shrinkable tube is moved from the first inspection location between the first roller and the second roller to a second inspection location between the second roller and a third roller by means of the moving carrier;
   Fig.5E is an illustrative view that the first heat shrinkable tube is placed and supported on the second roller and the third roller by lowering the moving carrier, in which the first heat shrinkable tube is rotated by an angle of 120 degrees with respect to the first angle position and located at a second angle position;

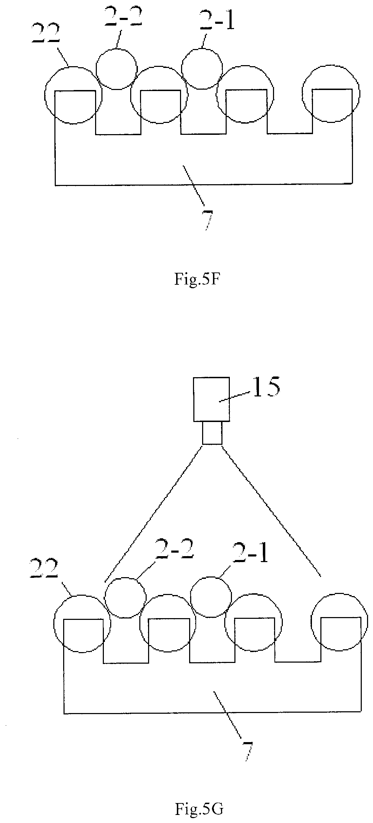

   Fig.5F is an illustrative view that the moving carrier returns to the initial position and loads a second heat shrinkable tube onto the first roller and the second roller, in which the second heat shrinkable tube is supported on the first inspection location and located at the first angle position, and the first heat shrinkable tube is supported on the second inspection location and located at the second angle position;
   Fig.5G is an illustrative view that the outer peripheral surfaces of the second heat shrinkable tube supported on the first inspection location and the first heat shrinkable tube supported on the second inspection location are inspected by the camera;

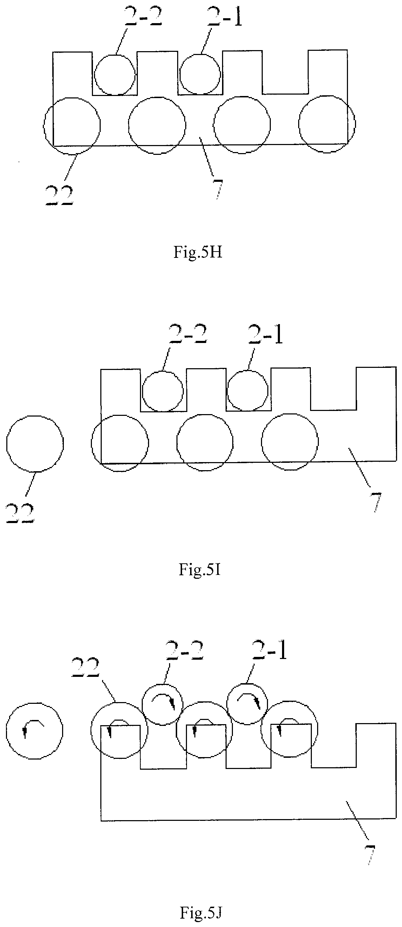

   Fig.5H is an illustrative view that the first heat shrinkable tube and the second heat shrinkable tube are lifted and supported by the moving carrier;
   Fig.5I is an illustrative view that the second heat shrinkable tube is moved from the first inspection location between the first roller and the second roller to the second inspection location between the second roller and the third roller by means of the moving carrier, and the first heat shrinkable tube is moved from the second inspection location between the second roller and the third roller to a third inspection location between the third roller and a fourth roller by means of the moving carrier;
   Fig.5J is an illustrative view that the second heat shrinkable tube is placed and supported on the second roller and the third roller, and the first heat shrinkable tube is placed and supported on the third roller and the fourth roller by lowering the moving carrier, in which the second heat shrinkable tube is rotated by an angle of 120 degrees with respect to the first angle position and located at the second angle position, and the first heat shrinkable tube is also rotated by an angle of 120 degrees with respect to the second angle position and located at a third angle position;

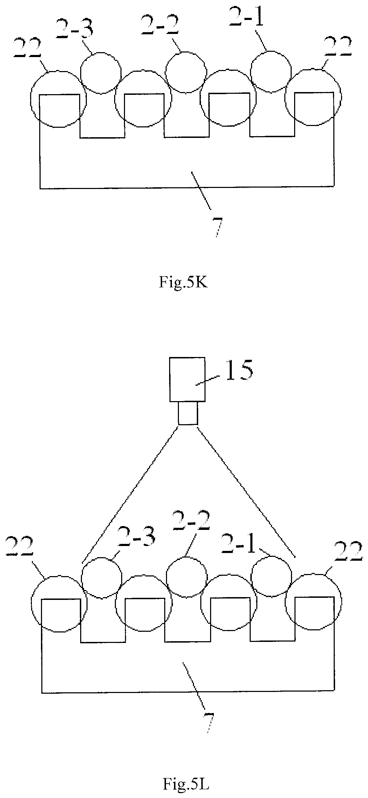

   Fig.5K is an illustrative view that the moving carrier returns to the initial position and loads a third heat shrinkable tube onto the first roller and the second roller, in which the third heat shrinkable tube is supported on the first inspection location and located at the first angle position, the second heat shrinkable tube is supported on the second inspection location and located at the second angle position, and the first heat shrinkable tube is supported on the third inspection location and located at the third angle position;
   Fig.5L is an illustrative view that the outer peripheral surfaces of the third heat shrinkable tube supported on the first inspection location, the second heat shrinkable tube supported on the second inspection location, and the first heat shrinkable tube supported on the third inspection location are inspected the camera;

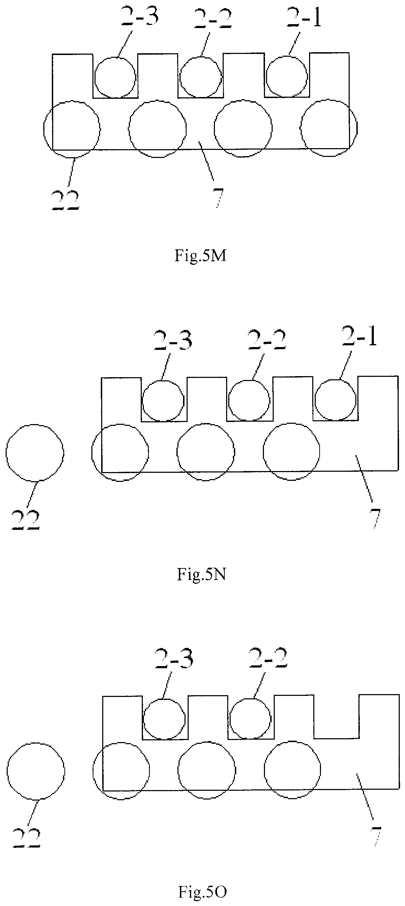

   Fig.5M is an illustrative view that the first heat shrinkable tube, the second heat shrinkable tube and the third heat shrinkable tube are lifted and supported by the moving carrier;
   Fig.5N is an illustrative view that the third heat shrinkable tube is moved from the first inspection location between the first roller and the second roller to the second inspection location between the second roller and the third roller by means of the moving carrier, the second heat shrinkable tube is moved from the second inspection location between the second roller and the third roller to the third inspection location between the third roller and the fourth roller by means of the moving carrier, and the first heat shrinkable tube is moved from the third inspection location between the third roller and the fourth roller to an unloading location;
   Fig.5O is an illustrative view that the first heat shrinkable tube is unloaded from moving carrier;

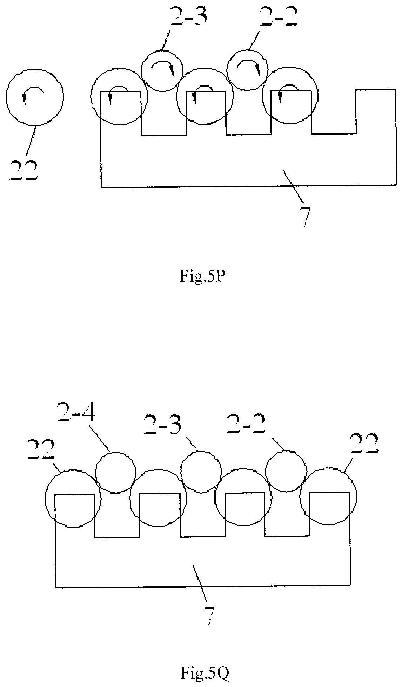

   Fig.5P is an illustrative view that the third heat shrinkable tube is placed and supported on the second roller and the third roller, and the second heat shrinkable tube is placed and supported on the third roller and the fourth roller by lowering the moving carrier, in which the third heat shrinkable tube is rotated by an angle of 120 degrees with respect to the first angle position and located at the second angle position, the second heat shrinkable tube is also rotated by an angle of 120 degrees with respect to the second angle position and located at the third angle position;
   Fig.5Q is an illustrative view that the moving carrier returns to the initial position and loads a fourth heat shrinkable tube onto the first roller and the second roller, in which the third heat shrinkable tube is supported on the second inspection location and located at the second angle position, and the second heat shrinkable tube is supported on the third inspection location and located at the third angle position;

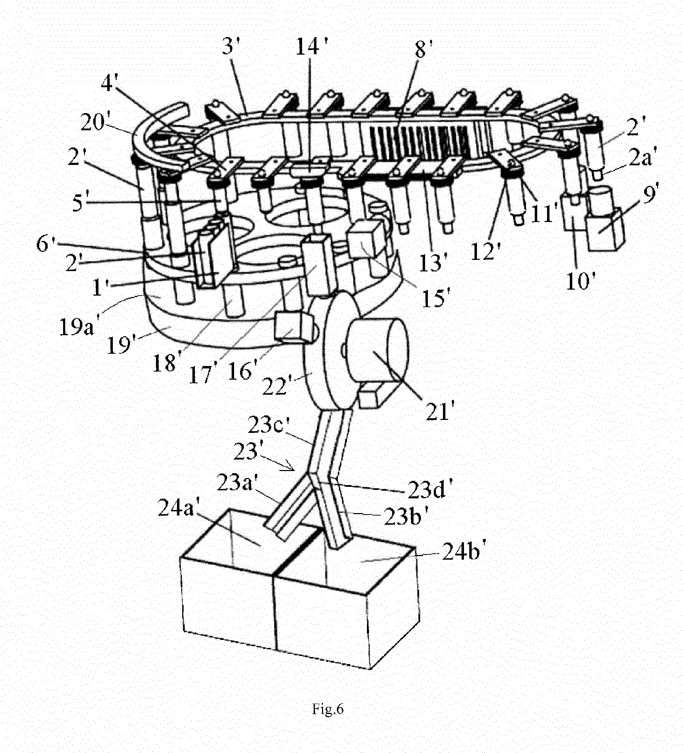

Fig.6 is an illustrative view of an automatic inspection platform for inspecting a heat shrinkable tube according to a not-claimed example;

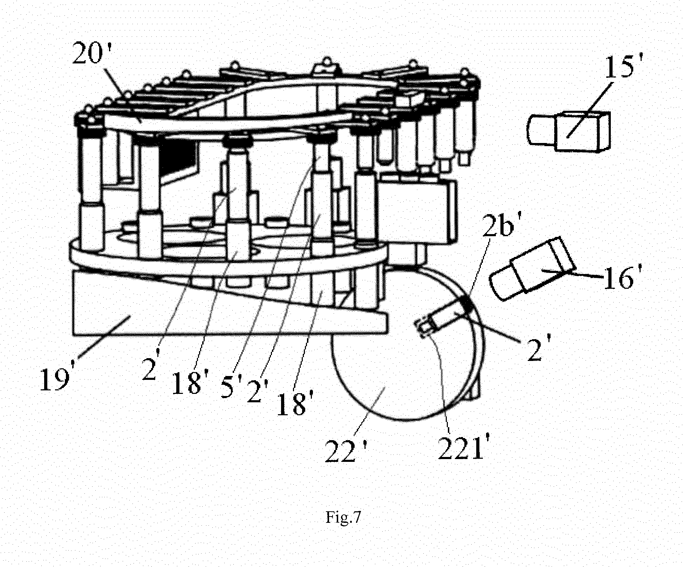

Fig.7 is an illustrative view of a loading mechanism configured to insert a heat shrinkable tube supplied from a supplying mechanism onto a ferrule of a clamping mechanism of Fig.6;

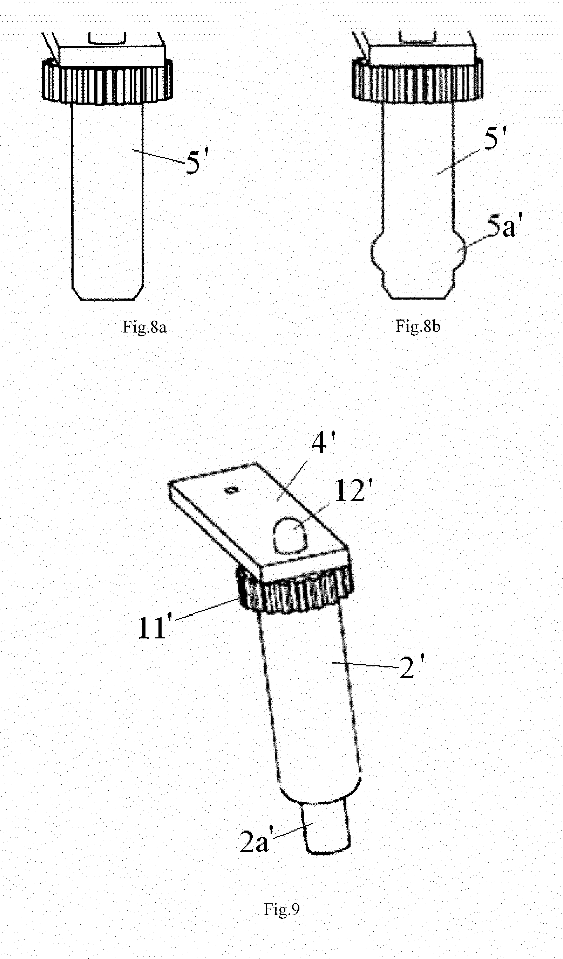

Fig.8a is an illustrative view that the ferrule of the clamping mechanism of Fig.6 is in a retracted state (or referred as an unexpanded state) before being inserted into the heat shrinkable tube;
Fig.8b is an illustrative view that the ferrule of the clamping mechanism of Fig.6 is in an expanded state after being inserted into the heat shrinkable tube; and
Fig.9 is an illustrative enlarged view of the clamping mechanism of Fig.6, in which the heat shrinkable tube is held on the ferrule of the clamping mechanism.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided an automatic inspection platform, comprising: a supplying mechanism configured to supply a tubular member to be inspected; a vision detector configured to inspect defects of the tubular member; and a conveying mechanism configured to convey the tubular member to a vision inspection location, so as to inspect the tubular member by means of the vision detector.

### First embodiment

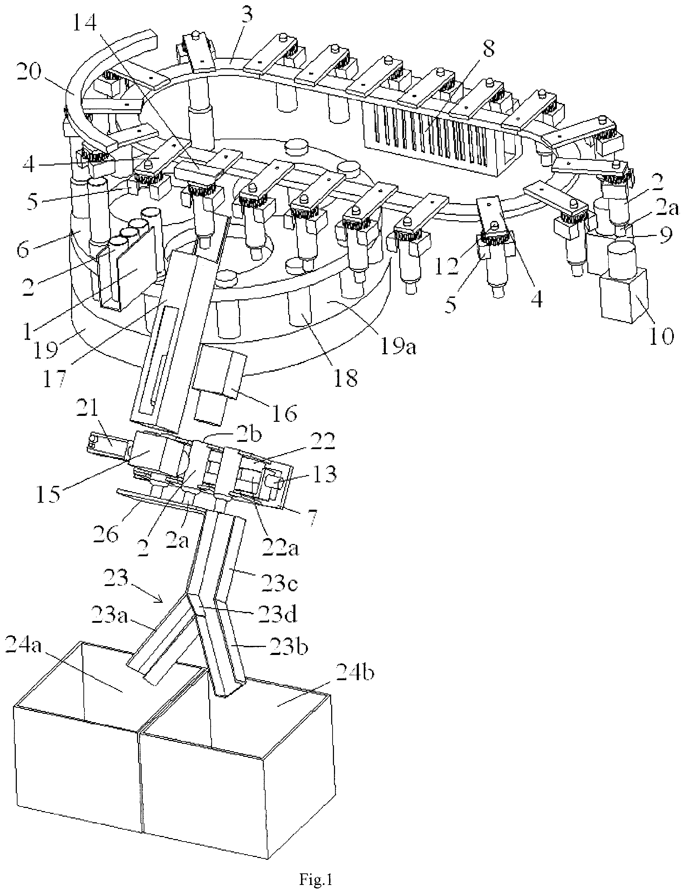

Fig.1 is an illustrative view of an automatic inspection platform for inspecting a heat shrinkable tube according to a first exemplary embodiment of the present invention.

In an exemplary embodiment of the present invention, as shown in Fig.1, the automatic inspection platform mainly comprises a supplying mechanism 1, a clamping mechanism 4, 5, an annular conveying mechanism 3, a heating mechanism 8 and a vision detector 9, 10, 15, 16.

As shown in Fig.1, the supplying mechanism 1 is configured to supply a tubular member to be inspected, for example, a heat shrinkable tube 2 for thermally shrunk on a joint of two electrical cables or two optical cables to protect the joint. In an embodiment, the supplying mechanism 1 may comprise a vibration screen, and the heat shrinkable tubes 2 may be supplied one by one by the vibration screen. In another embodiment, the supplying mechanism 1 may comprise a robot, and the robot is constructed to grab the heat shrinkable tubes 2 and supply the heat shrinkable tubes 2 to the clamping mechanism 4, 5 one by one.

Please be noted that the present invention is not limited to the illustrated embodiments, the automatic inspection platform is not only adapted to inspect the defects of the heat shrinkable tube 2, but also adapted to inspect any other tubular member, for example, an alignment sleeve of a fiber optic connector.

As shown in Fig.1, the clamping mechanism 4, 5 is configured to clamp one end 2b of the heat shrinkable tube 2. The annular conveying mechanism 3 is configured to convey the clamping mechanism 4, 5 and the heat shrinkable tube 2 clamped on the clamping mechanism 4, 5 to operation stations. The heating mechanism 8 is configured to heat the other end 2a of the heat shrinkable tube 2 (lower end of the clamped heat shrinkable tube), so that the other end 2a of the heat shrinkable tube 2 (upper end of the clamped heat shrinkable tube) is shrunk. The vision detector 9, 10, 15, 16 is configured to inspect defects of the tubular member 2.

As shown in Fig.1, in an exemplary embodiment of the present invention, the clamping mechanism 4, 5 comprises an installation plate 4 and a fixture 5. One end of the installation plate 4 is mounted on the annular conveying mechanism 3, so that the installation plate 4 is moved with the annular conveying mechanism 3. The fixture 5 is mounted on the other end of the installation plate 4 and configured to be opened or closed, so as to clamp or release the heat shrinkable tube 2.

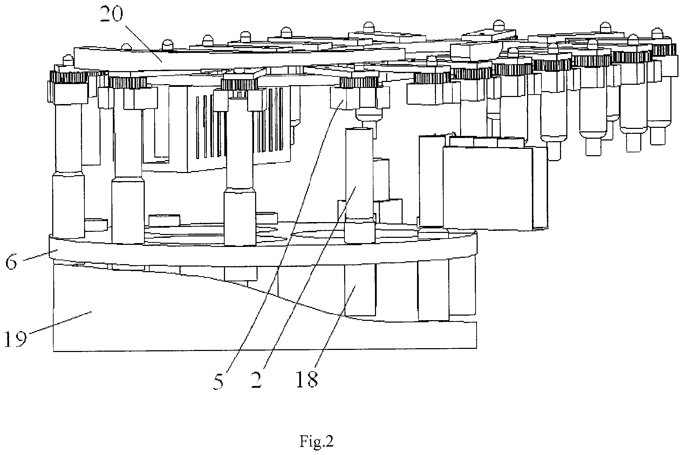

Fig.2 is an illustrative view of a loading mechanism 6, 18, 19 configured to insert the heat shrinkable tube 2 supplied from the supplying mechanism 1 into the fixture 5 of the clamping mechanism 4, 5 of Fig. 1.

As shown in Figs. 1-2, in an illustrated embodiment, the automatic inspection platform further comprises a loading mechanism 6, 18, 19. The loading mechanism 6, 18, 19 is configured to insert the heat shrinkable tube 2 supplied from the supplying mechanism 1 into the fixture 5 of the clamping mechanism 4, 5.

As shown in Figs. 1-2, the loading mechanism 6, 18, 19 mainly comprises a rotary table 19, a stationary table 6 and a plurality of lifting posts 18. The rotary table 19 is provided with a slope top surface 19a. The stationary table 6 is provided above the rotary table 19. The plurality of lifting posts 18 are slidably mounted in installation holes formed in the stationary table 6, respectively. The lower ends of the plurality of lifting posts 18 are supported on the slope top surface 19a of the rotary table 19. In this way, when the rotary table 19 rotates about a vertical axis, the lifting post 18 is gradually lifted along the slope top surface 19a by the rotary table 19 and pushes the heat shrinkable tube 2 into the fixture 5 of the clamping mechanism 4, 5.

As shown in Figs. 1-2, the clamping mechanism 4, 5 further comprises a state switch button 12. When the state switch button 12 is pressed, the fixture 5 is switched from a closed state to an opened state, so that the heat shrinkable tube 2 is allowed to be inserted into the fixture 5. When the state switch button 12 is released, the fixture 5 is switched from the opened state to the closed state, so as to hold the heat shrinkable tube 2 on the fixture 5.

As shown in Figs. 1-2, in an embodiment, the automatic inspection platform further comprises a first pressing plate 20 mounted at a position above the state switch button 12 which is in correspondence to the lifted heat shrinkable tube 2 and configured to press the state switch button 12. During inserting the heat shrinkable tube 2 into the fixture 5, the first pressing plate 20 presses the state switch button 12, so that the fixture 5 is switched to the opened state, and the heat shrinkable tube 2 is allowed to be inserted into the fixture 5. After inserting the heat shrinkable tube 2 into the fixture 5, the first pressing plate 20 releases the state switch button 12, so that the fixture 5 is switched to the closed state, and the heat shrinkable tube 2 is held by the fixture 5.

As shown in Fig.1, in an embodiment, the vision detector 9, 10, 15, 16 comprises a first camera 9 located at the annular conveying mechanism 3. The first camera 9 is provided to face the other end 2a of the heat shrinkable tube 2 and configured to inspect a first defect on the heated and shrunk other end 2a of the heat shrinkable tube 2.

In an exemplary embodiment, the first camera 9 has a co-axial lighting unit and is used to inspect an eccentric defect at an inner hole of the heated and shrunk other end 2a of the clamped heat shrinkable tube 2.

As shown in Fig.1, in an embodiment, the vision detector 9, 10, 15, 16 further comprises a second camera 10 located at the annular conveying mechanism 3. The second camera 10 is provided to face the other end 2a of the heat shrinkable tube 2 and configured to inspect a second defect on the heated and shrunk other end 2a of the heat shrinkable tube 2.

In an embodiment, the second camera 10 has a dome lighting unit and is used to inspect a diameter deviation at the inner hole of the heated and shrunk other end 2a of the heat shrinkable tube 2 and contaminants attached on an inner wall of the heated and shrunk other end 2a of the clamped heat shrinkable tube 2.

In the above exemplary embodiments, since the one end 2b (upper end) of the heat shrinkable tube 2 is fixed by the fixture 5, the inner hole and the outer peripheral surface of the one end 2b of the heat shrinkable tube 2 cannot be inspected when the heat shrinkable tube 2 is fixed by the fixture 5. In order to inspect the unheated and unshrunk one end 2b of the heat shrinkable tube 2, it needs to release the heat shrinkable tube 2 from the fixture 5.

As clearly shown in Fig.1, in an embodiment, the automatic inspection platform further comprises a second pressing plate 14 configured to press the state switch button 12. After the heat shrinkable tube 2 has been inspected by the first camera 9 and the second camera 10, the second pressing plate 14 presses the state switch button 12, so as to switch the fixture 5 from the closed state to the opened state. Once the fixture 5 is switched to the opened state, the heat shrinkable tube 2 is released from the fixture 5 and falls down under its gravity from the fixture 5.

As shown in Fig.1, in an embodiment, after the state switch button 12 is pressed by the second pressing plate 14, the heat shrinkable tube 2 falls down from the fixture 5, and then is guided by a guiding sleeve 17 to a first inspection location between a first roller 22 and a second roller 22 of the rolling mechanism 13, 21, 22, 22a and supported on the two adjacent first and second rollers 22, 22. At this time, the whole outer peripheral surface of the heat shrinkable tube 2 and the unheated and unshrunk one end 2b of the heat shrinkable tube 2 may be inspected by a third camera 15 and a fourth camera 16 (to be described later).

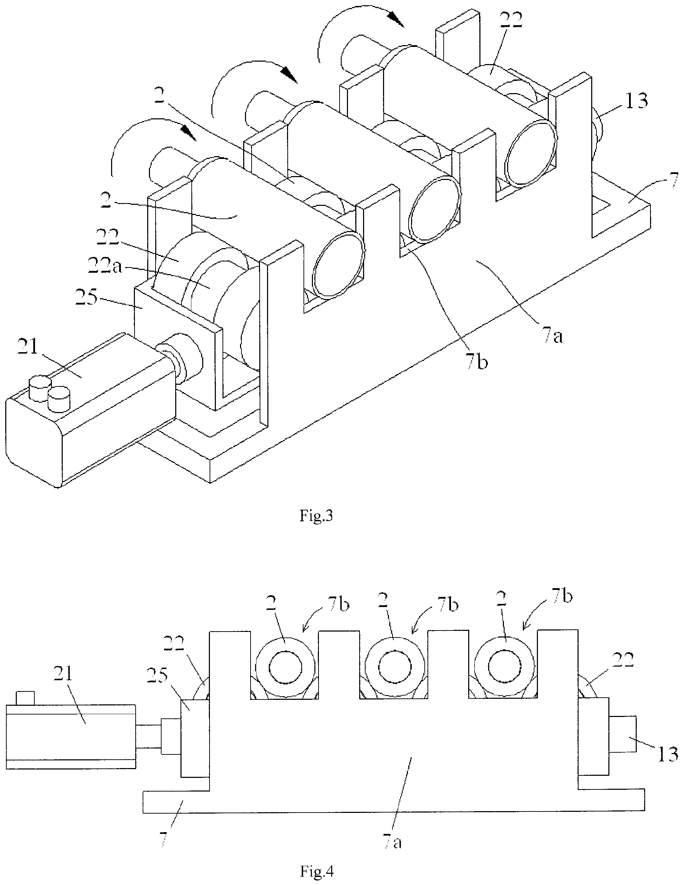

Fig.3 is an illustrative perspective view of the rolling mechanism 13, 21, 22, 22a and a moving carrier 7 of Fig.1; Fig.4 is an illustrative side view of the rolling mechanism 13, 21, 22, 22a and the moving carrier 7 of Fig.3.

As shown in Figs.1-4, in an embodiment, the conveying mechanism 3, 22 further comprises a rolling mechanism 13, 21, 22, 22a. The rolling mechanism 13, 21, 22, 22a comprises a plurality of rollers 22 and a driving device 13, 21, 22a. The plurality of rollers 22 are arranged in parallel in a row and spaced from each other. The driving device 13, 21, 22a is configured to drive the plurality of rollers 22 to roll. The heat shrinkable tube 2 is adapted to be supported on two adjacent rollers 22.

In an embodiment, as shown in Figs.1-4, the vision detector 9, 10, 15, 16 further comprises a third camera 15 located at the rolling mechanism 13, 21, 22, 22a. The third camera 15 is provided to face outer peripheral surfaces of the rollers 22 and configured to inspect a defect on an outer peripheral surface of the heat shrinkable tube 2 supported on two adjacent rollers 22. As shown in Fig.3, the rollers 22 are adapted to rotate the heat shrinkable tube 2 supported thereon to different angle positions, so that the third camera 15 is capable of inspecting the whole outer peripheral surface of the heat shrinkable tube 2.

Please referring to Fig.1 again, in an embodiment, the vision detector 9, 10, 15, 16 further comprises a fourth camera 16 located at the rolling mechanism 13, 21, 22, 22a. The fourth camera 16 is provided to face end surfaces of the one end 2b of the rollers 22 and configured to inspect a defect on the one end 2b of the heat shrinkable tube 2 supported on two adjacent rollers 22.

As shown in Figs. 1-4, in an embodiment, the driving device 13, 21, 22a comprises of: a plurality of worm wheels 22a connected to the rollers 22, respectively; an endless screw 13 engaged with the plurality of worm wheels 22a; and a motor 21 configured to drive the endless screw 13 to rotate. When the endless screw 13 is rotated by the motor 21, the endless screw 13 drives the worm wheels 22a to rotate, the worm wheels 22a drive the rollers 22 to rotate, and the rollers 22 drive the heat shrinkable tube 2 supported thereon to rotate.

As shown in Figs. 1-4, the automatic inspection platform further comprises a moving carrier 7. The moving carrier 7 is configured to move the heat shrinkable tube 2, which has been inspected by the third and fourth cameras 15, 16, to an unloading location (aligned to a passage 23c) and move the heat shrinkable tube 2, which is being inspected by the third and fourth cameras 15, 16, to change inspection locations between the rollers 22.

In an embodiment, as shown in Figs.1, 3 and 4, the plurality of rollers 22 of the rolling mechanism 13, 21, 22, 22a comprises the first roller, the second roller, a third roller and a fourth roller arranged in parallel in the row from one side (left side in Figs.3 and 4) to the other side (right side in Figs.3 and 4). A first inspection location is defined between the first roller and the second roller, a second inspection location is defined between the second roller and the third roller, and a third inspection location is defined between the third roller and the fourth roller. The moving carrier 7 is adapted to move the heat shrinkable tube 2 supported on the first inspection location between the first and second rollers 22, 22 to the second inspection location, the third inspection location and the unloading location, successively.

As shown in Fig.5A, the heat shrinkable tube 2 supported on the first inspection location is positioned at a first angle position; as shown in Fig.5E, the heat shrinkable tube 2 supported on the second inspection location is rotated from the first angle position to a second angle position; as shown in Fig.5J, the heat shrinkable tube 2 supported on the third inspection location is rotated from the second angle position to a third angle position.

In an embodiment, an angle difference between the first angle position and the second angle position is equal to 120 degrees, and an angle difference between the second angle position and the third angle position is equal to 120 degrees. That is, the heat shrinkable tube 2 is rotated by the rollers 22 at each time by 120 degrees. In this way, after being rotated two times, the third camera 15 may inspect the whole outer peripheral surface of one heat shrinkable tube 2.

As shown in Figs.3 and 4, in an embodiment, the moving carrier 7 comprises a base and two supporting sidewalls 7a, 7a provided at both sides of the base. The supporting sidewall 7a is formed with slots 7b. The rollers 22 are located between the two supporting sidewalls 7a, 7a, both ends 2a, 2b of the heat shrinkable tube 2 are adapted to be received and supported in the slots 7b of the two supporting sidewalls 7a.

As clearly shown in Fig.1, when the heat shrinkable tube 2 is moved to the unloading location (aligned to the passage 23c), the heat shrinkable tube 2 automatically falls down under its gravity from the moving carrier 7 into the passage 23c.

As clearly shown in Fig.1, in an embodiment, the rolling mechanism 13, 21, 22, 22a further comprises a holding member 26. The holding member 26 is configured to hold the heat shrinkable tube 2 at the first inspection location, the second inspection location and the third inspection location, so as to prevent the heat shrinkable tube 2 from falling down from the rollers 22 due to the gravity.

As shown in Fig.1, in an embodiment, the holding member 26 may comprise a piece of supporting plate. The supporting plate is provided to face the other ends of the rollers 22, which are inclined downward, so as to support the other end 2a of the heat shrinkable tube 2, which are inclined downward, and prevent the heat shrinkable tube 2 from falling down from the rollers 22 due to the gravity.

In an embodiment, the third camera 15 has a dome lighting unit and is used to inspect a length deviation of the heated and shrunk other end 2a of the heat shrinkable tube 2, a total length deviation of the heat shrinkable tube 2, a deformation defect of the heat shrinkable tube 2, and/or other defects, such as, holes, pits, burn marks, scratches or imprints, on the outer peripheral surface of the heat shrinkable tube 2.

In an embodiment, the fourth camera 16 has a Low Angle Lighting unit and is used to inspect pits in an inner wall of the unheated and unshrunk one end 2b of the heat shrinkable tube 2 and an inner diameter deviation of the unheated and unshrunk one end 2b of the heat shrinkable tube 2.

Figs.5A-5Q show a process of inspecting an outer peripheral surface of the heat shrinkable tube 2 by means of the rolling mechanism and the third camera 15.

Hereafter, it will describe in detail the process of inspecting the outer peripheral surface of the heat shrinkable tube 2 with reference to Figs.5A-5Q.

Firstly, as shown in Figs. 1 and 5A, after being released from the clamping mechanism 4, 5, a first heat shrinkable tube 2-1 is guided and transferred to the rolling mechanism 13, 21, 22, 22a by the guiding sleeve 17. The first heat shrinkable tube 2-1 is firstly loaded onto the first roller and the second roller of the rolling mechanism. At this time, the first heat shrinkable tube 2-1 is supported at the first inspection location and is located at the first angle position.

Then, as shown in Fig.5B, the third camera 15 is operated to inspect the outer peripheral surface of the first heat shrinkable tube 2-1 supported on the first roller and the second roller.

Then, as shown in Fig.5C, the first heat shrinkable tube 2-1 is lifted and supported by the moving carrier 7.

Then, as shown in Fig.5D, the first heat shrinkable tube 2-1 is transferred from the first inspection location between the first roller and the second roller to the second inspection location between the second roller and the third roller by means of the moving carrier 7.

Then, as shown in Fig.5E, the first heat shrinkable tube 2-1 is placed and supported on the second roller and the third roller by lowering the moving carrier 7. At this time, the first heat shrinkable tube 2-1 is rotated by an angle of 120 degrees with respect to the first angle position and located at the second angle position.

Then, as shown in Fig.5F, the moving carrier 7 returns to the initial position. A second heat shrinkable tube 2-2 is loaded onto the first roller and the second roller by the guiding sleeve 17. At this time, the second heat shrinkable tube 2-2 is supported on the first inspection location and located at the first angle position, while the first heat shrinkable tube 2-1 is supported on the second inspection location and located at the second angle position.

Then, as shown in Fig.5G, the third camera 15 is operated to inspect the outer peripheral surfaces of the second heat shrinkable tube 2-2 supported on the first inspection location and the first heat shrinkable tube 2-1 supported on the second inspection location.

Then, as shown in Fig.5H, the first heat shrinkable tube 2-1 and the second heat shrinkable tube 2-2 are lifted and supported by the moving carrier 7.

Then, as shown in Fig.5I, the second heat shrinkable tube 2-2 is transferred from the first inspection location between the first roller and the second roller to the second inspection location between the second roller and the third roller by means of the moving carrier 7, while the first heat shrinkable tube 2-1 is transferred from the second inspection location between the second roller and the third roller to the third inspection location between the third roller and the fourth roller by means of the moving carrier 7.

Then, as shown in Fig.5J, the second heat shrinkable tube 2-2 is placed and supported on the second roller and the third roller, and the first heat shrinkable tube 2-1 is placed and supported on the third roller and the fourth roller by lowering the moving carrier 7. At this time, the second heat shrinkable tube 2-2 is rotated by an angle of 120 degrees with respect to the first angle position and located at the second angle position, and the first heat shrinkable tube 2-1 is also rotated by an angle of 120 degrees with respect to the second angle position and located at the third angle position.

Then, as shown in Fig.5K, the moving carrier 7 returns to the initial position. A third heat shrinkable tube 2-3 is loaded onto the first roller and the second roller by the guiding sleeve 17. At this time, the third heat shrinkable tube 2-3 is supported on the first inspection location and located at the first angle position, the second heat shrinkable tube 2-2 is supported on the second inspection location and located at the second angle position, the first heat shrinkable tube 2-1 is supported on the third inspection location and located at the third angle position.

Then, as shown in Fig.5L, the third camera 15 is operated to inspect the outer peripheral surfaces of the third heat shrinkable tube 2-3 supported on the first inspection location, the second heat shrinkable tube 2-2 supported on the second inspection location, and the first heat shrinkable tube 2-1 supported on the third inspection location.

Then, as shown in Fig.5M, the first heat shrinkable tube 2-1, the second heat shrinkable tube 2-2 and the third heat shrinkable tube 2-3 are lifted and supported by the moving carrier 7.

Then, as shown in Fig.5N, the third heat shrinkable tube 2-3 is driven to move from the first inspection location between the first roller and the second roller to the second inspection location between the second roller and the third roller by means of the moving carrier 7, the second heat shrinkable tube 2-2 is driven to move from the second inspection location between the second roller and the third roller to the third inspection location between the third roller and the fourth roller by means of the moving carrier 7, and the first heat shrinkable tube 2-1 is driven to move from the third inspection location between the third roller and the fourth roller to the unloading location.

Then, as shown in Fig.5O, the first heat shrinkable tube is unloaded from moving carrier 7 and falls into the sorting mechanism 23.

Then, as shown in Fig.5P, the third heat shrinkable tube 2-3 is placed and supported on the second roller and the third roller, and the second heat shrinkable tube 2-2 is placed and supported on the third roller and the fourth roller by lowering the moving carrier 7. At this time, the third heat shrinkable tube 2-3 is rotated by an angle of 120 degrees with respect to the first angle position and located at the second angle position, and the second heat shrinkable tube 2-2 is also rotated by an angle of 120 degrees with respect to the second angle position and located at the third angle position.

Then, as shown in Fig.5Q, the moving carrier 7 returns to the initial position. A fourth heat shrinkable tube 2-4 is loaded onto the first roller and the second roller by the guiding sleeve 17. At this time, the third heat shrinkable tube 2-3 is supported on the second inspection location and located at the second angle position, the second heat shrinkable tube 2-2 is supported on the third inspection location and located at the third angle position.

Then, the steps shown in Figs.5L-5Q are repeated until all heat shrinkable tubes 2 to be inspected have been inspected by the third camera 15.

Although it is not shown, the automatic inspection platform further comprises a judgment device configured to determine whether the heat shrinkable inspected tube 2 is qualified based on inspection results of the vision detector 9, 10, 15, 16.

As clearly shown in Fig.1, the automatic inspection platform further comprises a sorting mechanism 23 configured to place the qualified heat shrinkable tube 2 into a first accommodate box 24a and place the unqualified heat shrinkable tube 2 into a second accommodate box 24b.

As shown in Fig.1, in an embodiment, the sorting mechanism 23 comprises: a passage 23c located below the moving carrier 7 and configured to receive the heat shrinkable heat 2 fallen down from the moving carrier 7; a first branch passage 23a selectively communicated with the passage 23c and extending into the first accommodate box 24a; a second branch passage 23b selectively communicated with the passage 23c and extending into the second accommodate box 24b; and a shutter 23d configured to selectively close the first branch passage 23a or the second branch passage 23b according to the judgment result of the judgment device.

As shown in Fig.1, in an embodiment, when the heat shrinkable tube 2 is determined as a qualified product, the shutter 23d is driven to close the second branch passage 23b and open the first branch passage 23a, so that the qualified heat shrinkable tube 2 is guided into the first accommodate box 24a through the first branch passage 23a; and when the heat shrinkable tube 2 is determined as an unqualified product, the shutter 23d is driven to close the first branch passage 23a and open the second branch passage 23b, so that the unqualified heat shrinkable tube 2 is guided into the second accommodate box 24b through the second branch passage 23b.

As shown in Fig.1, in an embodiment, the heat shrinkable tube 2 automatically falls down under its gravity from the moving carrier 7 into the passage 23c when the heat shrinkable tube 2 is moved to the unloading location, and automatically slides under its gravity into the first accommodate box 24a or the second accommodate box 24b through the first branch passage 23a or the second branch passage 23b.

### A not-claimed example

Fig.6 is an illustrative view of an automatic inspection platform for inspecting a heat shrinkable tube according to a not-claimed example.

As shown in Fig.6, the automatic inspection platform according to the not-claimed example mainly comprises a supplying mechanism 1', a clamping mechanism 4', 5', an annular conveying mechanism 3', a heating mechanism 8 and a vision detector 9', 10', 15', 16'.

As shown in Fig.6, the supplying mechanism 1' is configured to supply a tubular member, for example, a heat shrinkable tube 2', to be inspected. In a not-claimed example the supplying mechanism 1' may comprise a vibration screen, and the heat shrinkable tubes 2' may be supplied one by one by means of the vibration screen. In another not-claimed example the supplying mechanism 1' may comprise a robot, and the robot is constructed to grab the heat shrinkable tubes 2' and supply the heat shrinkable tubes 2' to the clamping mechanism 4', 5' one by one.

According to a not-claimed example the automatic inspection platform is not only adapted to inspect the defects of the heat shrinkable tube 2', but also adapted to inspect any other tubular member, for example, an alignment sleeve of a fiber optic connector.

As shown in Fig.6, the clamping mechanism 4', 5' is configured to clamp one end 2b' of the heat shrinkable tube 2'. The annular conveying mechanism 3' is configured to convey the clamping mechanism 4', 5' and the heat shrinkable tube 2' clamped on the clamping mechanism 4', 5' to operation stations. The heating mechanism 8' is configured to heat the other end 2a' of the heat shrinkable tube 2' (lower end of the clamped heat shrinkable tube), so that the other end 2a' of the heat shrinkable tube 2' (upper end of the clamped heat shrinkable tube) is shrunk. The vision detector 9', 10', 15', 16' is configured to inspect defects of the tubular member 2'.

Fig.8a is an illustrative view that the ferrule 5' of the clamping mechanism of Fig.6 is in a retracted state (or referred as an unexpanded state) before being inserted into the heat shrinkable tube 2'; Fig.8b is an illustrative view that the ferrule 5' of the clamping mechanism of Fig.6 is in an expanded state after being inserted into the heat shrinkable tube 2'; and Fig.9 is an illustrative enlarged view of the clamping mechanism of Fig.6, in which the heat shrinkable tube 2' is held on the ferrule 5' of the clamping mechanism.

As shown in Figs.6, 8a, 8b and 9, in a not-claimed example, the clamping mechanism 4', 5' mainly comprises an installation plate 4' and a ferrule 5'. One end of the installation plate 4' is mounted on the annular conveying mechanism 3'. The installation plate 4' is configured to move with the annular conveying mechanism 3'. The ferrule 5' is mounted on the other end of the installation plate 4' and configured to be expanded outward. In this way, after being inserted into an inner hole of the heat shrinkable tube 2', the ferrule 5' is expanded outward and abuts against the inner wall of the heat shrinkable tube 2', so as to hold the heat shrinkable tube 2' on the ferrule 5'.

Fig.7 is an illustrative view of a loading mechanism 6', 18', 19' configured to insert a heat shrinkable tube 2' supplied from a supplying mechanism 1' onto the ferrule 5' of the clamping mechanism of Fig.6.

As shown in Figs.6-7, in a not-claimed example, the automatic inspection platform further comprises a loading mechanism 6', 18', 19', which is configured to insert the heat shrinkable tube 2' supplied from the supplying mechanism 1' onto the ferrule 5' of the clamping mechanism 4', 5'.

As shown in Figs.6-7, the loading mechanism 6', 18', 19' mainly comprises a rotary table 19', a stationary table 6' and a plurality of lifting posts 18'. The rotary table 19' has a slope top surface 19a'. The stationary table 6' is provided above the rotary table 19'. The plurality of lifting posts 18' are slidably mounted in installation holes formed in the stationary table 6', respectively. The lower ends of the plurality of lifting posts 18' are supported on the slope top surface 19a' of the rotary table 19'. In this way, when the rotary table 19' rotates about a vertical axis, the lifting post 18' is gradually lifted along the slope top surface 19a' by the rotary table 19' and pushes the heat shrinkable tube 2' onto the ferrule 5' of the clamping mechanism 4', 5'.

As shown in Figs.6, 7 and 9, the clamping mechanism 4', 5' further comprises a state switch button 12'. When the state switch button 12' is pressed, the ferrule 5' is switched from an expanded state shown in Fig.8b to a retracted state (or referred as an unexpanded state) shown in Fig.8a, so that the heat shrinkable tube 2' is allowed to be inserted onto the ferrule 5'. When the state switch button 12' is released, the ferrule 5' is switched from the retracted state to the expanded state, so as to hold the heat shrinkable tube 2' on the ferrule 5'.

As shown in Figs.6, 7 and 9, in a not-claimed example, the automatic inspection platform further comprises a first pressing plate 20' configured to press the state switch button 12'. Specifically, during inserting the heat shrinkable tube 2' onto the ferrule 5', the first pressing plate 20' presses the state switch button 12', so that the ferrule 5' is switched to the retracted state as shown in Fig.8a, and so that the heat shrinkable tube 2' is allowed to be inserted onto the ferrule 5'. After inserting the heat shrinkable tube 2' onto the ferrule 5', the first pressing plate 20' releases the state switch button 12', so that the ferrule 5' is switched to the expanded state as shown in Fig.8b, and so that the heat shrinkable tube 2' is held on the ferrule 5'.

As shown in Fig.6, in a not-claimed example, the automatic inspection platform further comprises a heating mechanism 8'. The heating mechanism 8' is configured to heat the other end 2a' (lower end far away from the ferrule 5' in Fig.6) of the heat shrinkable tube 2', so that the other end 2a' of the heat shrinkable tube 2' is shrunk.

As shown in Fig.6, in a not-claimed example, the vision detector 9', 10', 15', 16' comprises a first camera 9' located at the annular conveying mechanism 3'. The first camera 9' is provided to face the other end 2a' of the heat shrinkable tube 2' and configured to inspect a first defect on the heated and shrunk other end 2a' of the heat shrinkable tube 2'.

In a not-claimed example, the first camera 9' has a co-axial lighting unit and is used to inspect an eccentric defect at an inner hole of the heated and shrunk other end 2a' of the heat shrinkable tube 2'.

As shown in Fig.6, in a not-claimed example, the vision detector 9', 10', 15', 16' further comprises a second camera 10' located at the annular conveying mechanism 3'. The second camera 10' is provided to face the other end 2a' of the heat shrinkable tube 2' and configured to inspect a second defect on the heated and shrunk other end 2a' of the heat shrinkable tube 2'.

In a not-claimed example, the second camera 10' has a dome lighting unit and is used to inspect a diameter deviation at the internal hole of the heated and shrunk other end 2a' of the heat shrinkable tube 2' and contaminants attached on an inner wall of the heated and shrunk other end 2a' of the heat shrinkable tube 2'.

As shown in Figs.6 and 9, in a not-claimed example, the ferrule 5' is rotatably mounted on the installation plate 4'. The clamping mechanism 4', 5' further comprises a gear 11' fixed to the ferrule 5'. The automatic inspection platform further comprises a rack 13' engaged with the gear 11' and configured to drive the ferrule 5' and the heat shrinkable tube 2' on the ferrule 5' to rotate about an axis of the heat shrinkable tube 2'.

As shown in Figs.6 and 7, in a not-claimed example, the vision detector 9', 10', 15', 16' further comprises a third camera 15' located at the annular conveying mechanism 3'. The third camera 15' is provided to face an outer peripheral surface of the heat shrinkable tube 2' and configured to inspect a third defect on the outer peripheral surface of the heat shrinkable tube 2'. When the heat shrinkable tube 2' is inspected by the third camera 15', the rack 13' drives the heat shrinkable tube 2' on the ferrule 5' to rotate, so that the third camera 15' is capable of inspecting whole outer peripheral surface of the heat shrinkable tube 2'.

In the above examples, since the ferrule 5' is inserted into the heat shrinkable tube 2', instead of being clamped on the outer wall of the heat shrinkable tube, the whole outer wall of the heat shrinkable tube 2' is exposed to the third camera 15', and may be inspected by the third camera 15', improving the inspection accuracy.

In a not-claimed example, the third camera 15' has a dome lighting unit and is used to inspect a length deviation of the heated and shrunk other end 2a' of the heat shrinkable tube 2', a total length deviation of the heat shrinkable tube 2', a deformation defect of the heat shrinkable tube 2', or other defects, such as, holes, pits, burn marks, scratches or imprints, on an outer peripheral surface of the heat shrinkable tube 2'.

As clearly shown in Fig.6, in a not-claimed example, the automatic inspection platform further comprises a second pressing plate 14' configured to press the state switch button 12'. After the heat shrinkable tube 2' has been inspected by the first camera 9', the second camera 10' and the third camera 15', the second pressing plate 14' presses the state switch button 12', so as to switch the ferrule 5' from the expanded state shown in Fig.8b to the retracted state shown in Fig.8a, and so that the heat shrinkable tube 2' is allowed to fall down from the ferrule 5'.

As shown in Figs.6 and 7, in a not-claimed example, the conveying mechanism 3', 22' further comprises a rotating disk 22' and a motor 21' configured to drive the rotating disk 22' to rotate about its axis. A radial receiving hole 221', adapted to receive the heat shrinkable tube 2' therein, is formed in an outer peripheral wall of the rotating disk 22'. After the state switch button 12' is pressed by the second pressing plate 14', the heat shrinkable tube 2' falls down from the ferrule 5' and is guided into the radial receiving hole 221' of the rotating disk 22'.

As shown in Figs.6 and 7, in a not-claimed example, the vision detector 9', 10', 15', 16' further comprises a fourth camera 16' located at the rotating disk 22'. The fourth camera 16' is provided to face an outer peripheral surface of the rotating disk 22' and configured to inspect a fourth defect on the unheated and unshrunk one end 2b' of the heat shrinkable tube 2'.

In a not-claimed example, the fourth camera 16' has a Low Angle Lighting unit and is used to inspect pits in an inner wall of the unheated and unshrunk one end 2b' of the heat shrinkable tube 2' and an inner diameter deviation of the unheated and unshrunk one end 2b' of the heat shrinkable tube 2'.

In a not-claimed example, as shown in Figs.6 and 7, the heat shrinkable tube 2' fallen down from the ferrule 5' is guided into the radial receiving hole 221' of the rotating disk 22' by means of a guiding sleeve 17'.

Although it is not shown, the automatic inspection platform further comprises a judgment device configured to determine whether the heat shrinkable inspected pipe 2' is qualified based on inspection results of the vision detector 9', 10', 15', 16'.

As clearly shown in Fig.6, the automatic inspection platform further comprises a sorting mechanism 23' configured to place the qualified heat shrinkable tube 2' into a first accommodate box 24a' and place the unqualified heat shrinkable tube 2' into a second accommodate box 24b'.

As shown in Fig.6, in a not-claimed example, the sorting mechanism 23' comprises: a passage 23c' located below the rotating disk 22' and configured to receive the heat shrinkable heat 2' fallen down from the rotating disk 22'; a first branch passage 23a' selectively communicated with the passage 23c' and extending into the first accommodate box 24a'; a second branch passage 23b' selectively communicated with the passage 23c' and extending into the second accommodate box 24b'; and a shutter 23d' configured to selectively close the first branch passage 23a' or the second branch passage 23b' according to the judgment result of the judgment device.

As shown in Fig.6, in a not-claimed example, when the heat shrinkable tube 2' is determined as a qualified product, the shutter 23d' is driven to close the second branch passage 23b' and open the first branch passage 23a', so that the qualified heat shrinkable tube 2' is guided into the first accommodate box 24a' through the first branch passage 23a'.

As shown in Fig.6, in a not-claimed example, when the heat shrinkable tube 2' is determined as an unqualified product, the shutter 23d' is driven to close the first branch passage 23a' and open the second branch passage 23b', so that the unqualified heat shrinkable tube 2' is guided into the second accommodate box 24b' through the second branch passage 23b'.

As shown in Fig.6, in a not-claimed example, the heat shrinkable tube 2' in the radial receiving hole 221' automatically falls down under its gravity from the rotating disk 22' into the passage 23c' when the radial receiving hole 221' is rotated to be downward, and automatically slides under its gravity into the first accommodate box 24a' or the second accommodate box 24b' through the first branch passage 23a' or the second branch passage 23b'.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle However the scope of the embodiments is defined in the appended claims only.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property .

## Claims

1. An automatic inspection platform, comprising:
a supplying mechanism (1) configured to supply a tubular member (2) to be inspected;
a vision detector (9, 10, 15, 16) configured to inspect defects of the tubular member (2); and
a conveying mechanism (3, 22) configured to convey the tubular member (2) to a vision inspection location, so as to inspect the tubular member (2) by means of the vision detector (9, 10, 15, 16), wherein the tubular member (2) is a heat shrinkable tube,
**characterized in that** the automatic inspection platform, further comprises a clamping mechanism (4, 5) configured to clamp one end (2b) of the heat shrinkable tube (2);
a heating mechanism (8) configured to heat the other end (2a) of the heat shrinkable tube (2), so that the other end (2a) of the heat shrinkable tube (2) is shrunk wherein the conveying mechanism (3, 22) comprises an annular conveying mechanism (3) configured to convey the clamping mechanism (4, 5) and the heat shrinkable tube (2) clamped on the clamping mechanism (4, 5);
wherein the vision detector (9, 10, 15, 16) comprises a first camera (9) located at the annular conveying mechanism (3), provided to face the other end (2a) of the heat shrinkable tube (2), and configured to inspect a first defect on the heated and shrunk other end (2a) of the heat shrinkable tube (2),
wherein the vision detector (9, 10, 15, 16) further comprises a second camera (10) located at the annular conveying mechanism (3), provided to face the other end (2a) of the heat shrinkable tube (2), and configured to inspect a second defect on the heated and shrunk other end (2a) of the heat shrinkable tube (2),
and wherein the conveying mechanism (3, 22) further comprises a rolling mechanism (13, 21, 22, 22a),
wherein the rolling mechanism (13, 21, 22, 22a) comprises a plurality of rollers (22) arranged in a row and spaced from each other, the rollers (22) being adapted to rotate the heat shrinkable tube (2) supported thereon to different angle positions, so that a third camera (15) is capable of inspecting whole outer peripheral surface of the heat shrinkable tube (2), and a driving device (13, 21, 22a) configured to drive the plurality of rollers (22) to roll, wherein the vision detector (9, 10, 15, 16) further comprises the third camera (15) located at the rolling mechanism (13, 21, 22, 22a), provided to face outer peripheral surfaces of the rollers (22), and configured to inspect a defect on an outer peripheral surface of the heat shrinkable tube (2) supported on two adjacent rollers (22).

2. The automatic inspection platform according to claim 1,
**characterized in that** the clamping mechanism (4, 5) comprises:
an installation plate (4), one end of which is mounted on the annular conveying mechanism (3), configured to move with the annular conveying mechanism (3); and
a fixture (5) mounted on the other end of the installation plate (4) and configured to be opened or closed, so as to clamp or release the heat shrinkable tube (2).

3. The automatic inspection platform according to claim 2,
**characterized in that** the clamping mechanism (4, 5) further comprises a state switch button (12);
when the state switch button (12) is pressed, the fixture (5) is switched from a closed state to an opened state, so that the heat shrinkable tube (2) is allowed to be inserted into the fixture (5); and
when the state switch button (12) is released, the fixture (5) is switched from the opened state to the closed state, so as to fix the heat shrinkable tube (2) on the fixture (5).

4. The automatic inspection platform according to claim 3, further comprising:
a first pressing plate (20) configured to press the state switch button (12),
wherein during inserting the heat shrinkable tube (2) into the fixture (5), the first pressing plate (20) presses the state switch button (12), so that the heat shrinkable tube (2) is inserted into the fixture (5); and
wherein after inserting the heat shrinkable tube (2) into the fixture (5), the first pressing plate (20) releases the state switch button (12), so as to fix the heat shrinkable tube (2) on the fixture (5).

5. The automatic inspection platform according to claim 4,
**characterized in that** the vision detector (9, 10, 15, 16) comprises a first camera (9) located at the annular conveying mechanism (3), provided to face the other end (2a) of the heat shrinkable tube (2), and configured to inspect a first defect on the heated and shrunk other end (2a) of the heat shrinkable tube (2);
wherein the first camera (9) is used to inspect an eccentric defect of an inner hole of the heated and shrunk other end (2a) of the heat shrinkable tube (2).

6. The automatic inspection platform according to claim 5,
**characterized in that** the second camera (10) is used to inspect a diameter deviation of the inner hole of the heated and shrunk other end (2a) of the heat shrinkable tube (2) and contaminants attached on an inner wall of the heated and shrunk other end (2a) of the heat shrinkable tube (2).

7. The automatic inspection platform according to claim 6, further comprising:
a second pressing plate (14) configured to press the state switch button (12),
wherein after the heat shrinkable tube (2) has been inspected by the first camera (9) and the second camera (10), the second pressing plate (14) presses the state switch button (12), so as to switch the fixture (5) from the closed state to the opened state, so that the heat shrinkable tube (2) falls down from the fixture (5).

8. The automatic inspection platform according to claim 7,
**characterized in that** the heat shrinkable tube (2) is adapted to be supported on two adjacent rollers (22), and
wherein after the state switch button (12) is pressed by the second pressing plate (14), the heat shrinkable tube (2) falls down from the fixture (5) and is guided to a location between a first roller (22) and a second roller (22) of the rolling mechanism (13, 21, 22, 22a) and supported on the adjacent first and second rollers (22, 22);
wherein the heat shrinkable tube (2) fallen down from the fixture (5) is guided by a guiding sleeve (17) to the first inspection location between the first roller (22) and the second roller (22).

9. The automatic inspection platform according to claim 8,
**characterized in that** wherein the third camera (15) is used to inspect a length deviation of the heated and shrunk other end (2a) of the heat shrinkable tube (2), a total length deviation of the heat shrinkable tube (2), a deformation defect of the heat shrinkable tube (2), or other defects including holes, pits, burn marks, scratches or imprints, on an outer peripheral surface of the heat shrinkable tube (2).

10. The automatic inspection platform according to claim 9,
**characterized in that** the vision detector (9, 10, 15, 16) further comprises a fourth camera (16) located at the rolling mechanism (13, 21, 22, 22a), provided to face end surfaces of the rollers (22), and configured to inspect a defect on the one end of the heat shrinkable tube (2) supported on two adjacent rollers (22);
wherein the fourth camera (16) is used to inspect pits in an inner wall of the unheated and unshrunk one end (2b) of the heat shrinkable tube (2) and an inner diameter deviation of the unheated and unshrunk one end (2b) of the heat shrinkable tube (2).

11. The automatic inspection platform according to claim 10,
**characterized in that** the driving device (13, 21, 22a) comprises:
a plurality of worm wheels (22a) connected to the rollers (22), respectively;
an endless screw (13) engaged with the plurality of worm wheels (22a); and
a motor (21) configured to drive the endless screw (13) to rotate,
when the endless screw (13) is rotated by the motor (21), the endless screw (13) drives the worm wheels (22a) to rotate, the worm wheels (22a) drive the rollers (22) to rotate, and the rollers (22) drive the heat shrinkable tube (2) supported thereon to rotate.

12. The automatic inspection platform according to claim 11, further comprising:
a moving carrier (7) configured to move the heat shrinkable tube (2), which has been inspected by the third and fourth cameras (15, 16), to an unloading location and transfer the heat shrinkable tube (2), which is being inspected by the third and fourth cameras (15, 16), to inspection locations between the rollers (22).

13. The automatic inspection platform according to claim 12,
**characterized in that** the plurality of rollers (22) of the rolling mechanism (13, 21, 22, 22a) comprises the first roller (22), the second roller (22), a third roller (22) and a fourth roller (22) arranged in parallel in a row from one side to the other side;
wherein a first inspection location is defined between the first roller (22) and the second roller (22), a second inspection location is defined between the second roller (22) and the third roller (22), and a third inspection location is defined between the third roller (22) and the fourth roller (22); and
wherein the moving carrier (7) is adapted to convey the heat shrinkable tube (2) supported on the first inspection location between the first and second rollers (22, 22) to the second inspection location, the third inspection location and the fourth inspection location, successively;
wherein the heat shrinkable tube (2) supported on the first inspection location is positioned at a first angle position;
wherein the heat shrinkable tube (2) supported on the second inspection location is rotated from the first angle position to a second angle position;
wherein the heat shrinkable tube (2) supported on the third inspection location is rotated from the second angle position to a third angle position;
wherein the heat shrinkable tube (2) automatically falls down from the moving carrier (7) due to the gravity when the heat shrinkable tube (2) is moved to the unloading location;
wherein an angle difference between the first angle position and the second angle position is equal to 120 degrees, and an angle difference between the second angle position and the third angle position is equal to 120 degrees.

14. The automatic inspection platform according to claim 13,
**characterized in that** the moving carrier (7) comprises a base and two supporting sidewalls (7a, 7a) provided at both sides of the base, the supporting sidewall (7a) being formed with slots (7b), and
wherein the rollers (22) are located between the two supporting sidewalls (7a, 7a), and both ends (2a, 2b) of the heat shrinkable tube (2) are adapted to be received and supported in slots (7b) of the two supporting sidewalls (7a).

15. The automatic inspection platform according to claim 14,
**characterized in that** the rolling mechanism (13, 21, 22, 22a) further comprises a holding member (26) configured to hold the heat shrinkable tube (2) at the first inspection location, the second inspection location and the third inspection location, so as to prevent the heat shrinkable tube (2) from falling down from the rollers (22);
wherein the holding member (26) comprises a piece of supporting plate, the supporting plate being provided to face the other ends of the rollers (22), which are inclined downward, so as to support the other end (2a) of the heat shrinkable tube (2), which is inclined downward.

16. The automatic inspection platform according to claim 4, further comprising:
a judgment device configured to determine whether the heat shrinkable inspected pipe (2) is qualified based on inspection results of the vision detector (9, 10, 15, 16); and
a sorting mechanism (23) configured to place the qualified heat shrinkable tube (2) into a first accommodate box (24a) and place the unqualified heat shrinkable tube (2) into a second accommodate box (24b).

17. The automatic inspection platform according to claim 16,
**characterized in that** the sorting mechanism (23) comprises:
a passage (23c) located below the moving carrier (7) and configured to receive the heat shrinkable heat (2) fallen down from the moving carrier (7);
a first branch passage (23a) selectively communicated with the passage (23c) and extending into the first accommodate box (24a);
a second branch passage (23b) selectively communicated with the passage (23c) and extending into the second accommodate box (24b); and
a shutter (23d) configured to selectively close the first branch passage (23a) or the second branch passage (23b) according to the judgment result of the judgment device,
wherein when the heat shrinkable tube (2) is determined as a qualified product, the shutter (23d) close the second branch passage (23b) and open the first branch passage (23a), so that the qualified heat shrinkable tube (2) is guided into the first accommodate box (24a) through the first branch passage (23a),
wherein when the heat shrinkable tube (2) is determined as an unqualified product, the shutter (23d) close the first branch passage (23a) and open the second branch passage (23b), so that the unqualified heat shrinkable tube (2) is guided into the second accommodate box (24b) through the second branch passage (23b).

18. The automatic inspection platform according to claim 17,
**characterized in that** the heat shrinkable tube (2) automatically falls down under its gravity from the moving carrier (7) into the passage (23c) when the heat shrinkable tube (2) is conveyed to the unloading location, and automatically slides under its gravity into the first accommodate box (24a) or the second accommodate box (24b) through the first branch passage (23a) or the second branch passage (23b).

## Patentansprüche

1. Automatische Prüfplattform, die umfasst:
einen Zuführ-Mechanismus (1), der so ausgeführt ist, dass er ein zu prüfendes röhrenförmiges Element (2) zuführt;
einen optischen Detektor (9, 10, 15, 16), der so ausgeführt ist, dass er Defekte des röhrenförmigen Elementes (2) prüft; und
einen Förder-Mechanismus (3, 22), der so ausgeführt ist, dass er das röhrenförmige Element (2) zu einer Position für optische Prüfung befördert, um das röhrenförmige Element (2) mittels des optischen Detektors (9, 10, 15, 16) zu prüfen, wobei das röhrenförmige Element (2) ein Schrumpfschlauch ist,
**dadurch gekennzeichnet, dass** die automatische Prüfplattform des Weiteren einen Klemm-Mechanismus (4, 5) umfasst, der so ausgeführt ist, dass er ein Ende (2b) des Schrumpfschlauchs (2) festklemmt;
einen Heiz-Mechanismus (8), der so ausgeführt ist, dass er das andere Ende (2a) des Schrumpfschlauchs (2) erhitzt, so dass das andere Ende (2a) des Schrumpfschlauchs (2) geschrumpft wird, wobei der Förder-Mechanismus (3, 22) einen ringförmigen Förder-Mechanismus (3) umfasst, der so ausgeführt ist, dass er den Klemm-Mechanismus(4, 5) und den an dem Klemm-Mechanismus (4, 5) festgeklemmten Schrumpfschlauch (2) befördert;
wobei der optische Detektor (9, 10, 15, 16) eine erste Kamera (9) umfasst, die an dem ringförmigen Förder-Mechanismus (3) angeordnet ist, dem anderen Ende (2a) des Schrumpfschlauchs (2) zugewandt und so ausgeführt ist, dass sie einen ersten Defekt an dem erhitzten und geschrumpften anderen Ende (2a) des Schrumpfschlauchs (2) prüft,
der optische Detektor (9, 10, 15, 16) des Weiteren eine zweite Kamera (10) umfasst, die an dem ringförmigen Förder-Mechanismus (3) angeordnet ist, dem anderen Ende (2a) des Schrumpfschlauchs (2) zugewandt und so ausgeführt ist, dass sie einen zweiten Defekt an dem erhitzten und geschrumpften anderen Ende (2a) des Schrumpfschlauchs (2) prüft,
und der Förder-Mechanismus (3, 22) des Weiteren einen Roll-Mechanismus (13, 21, 22, 22a) umfasst,
wobei der Roll-Mechanismus (13, 21, 22, 22a) eine Vielzahl von Rollen (22), die in einer Reihe angeordnet und voneinander beabstandet sind, wobei die Rollen (22) so eingerichtet sind, dass sie den darauf aufliegenden Schrumpfschlauch (2) an verschiedene Winkelstellungen drehen, so dass eine dritte Kamera (15) in der Lage ist, die gesamte Außenumfangsfläche des Schrumpfschlauchs (2) zu prüfen, sowie eine Antriebsvorrichtung (13, 21, 22a) umfasst, die so ausgeführt ist, dass sie die Vielzahl von Rollen (22) rollend antreibt, wobei der optische Detektor (9, 10, 15, 16) des Weiteren die dritte Kamera (15) umfasst, die an dem Roll-Mechanismus (13, 21, 22, 22a) angeordnet ist, den Außenumfangsflächen der Rollen (22) zugewandt und so ausgeführt ist, dass sie einen Defekt an einer Außenumfangsfläche des Schrumpfschlauchs (2) prüft, der auf zwei benachbarten Rollen (22) aufliegt.

2. Automatische Prüfplattform nach Anspruch 1,
**dadurch gekennzeichnet, dass** der Klemm-Mechanismus (4, 5) umfasst:
eine Installations-Platte (4), deren eines Ende an dem ringförmigen Förder-Mechanismus (3) angebracht ist und die so ausgeführt ist, dass sie sich mit dem ringförmigen Förder-Mechanismus (3) bewegt; und
einen Halter (5), der an dem anderen Ende der Installationsplatte (4) angebracht und so ausgeführt ist, dass er geöffnet oder geschlossen wird, um den Schrumpfschlauch (2) festzuklemmen oder freizugeben.

3. Automatische Prüfplattform nach Anspruch 2,
**dadurch gekennzeichnet, dass** der Klemm-Mechanismus (4, 5) des Weiteren einen Zustands-Umschaltknopf (12) umfasst;
wenn der Zustands-Umschaltknopf (12) gedrückt wird, der Halter (5) von einem geschlossenen Zustand in einen geöffneten Zustand umgeschaltet wird, so dass der Schrumpfschlauch (2) in den Halter (5) eingeführt werden kann; und
wenn der Zustands-Umschaltknopf (12) freigegeben wird, die Halterung (5) von dem geöffneten Zustand in den geschlossenen Zustand umgeschaltet wird, um den Schrumpfschlauch (2) an dem Halter (5) zu fixieren.

4. Automatische Prüfplattform nach Anspruch 3, die des Weiteren umfasst:
eine erste Drück-Platte (20), die so ausgeführt ist, dass sie den Zustands-Umschaltknopf (12) drückt,
wobei beim Einführen des Schrumpfschlauchs (2) in den Halter (5) die erste Drück-Platte (20) den Zustands-Umschaltknopf (12) drückt, so dass der Schrumpfschlauch (2) in den Halter (5) eingeführt wird; und
nach Einführen des Schrumpfschlauchs (2) in den Halter (5) die erste Drück-Platte (20) den Zustands-Umschaltknopf (12) freigibt, so dass der Schrumpfschlauch (2) an dem Halter (5) fixiert wird.

5. Automatische Prüfplattform nach Anspruch 4,
**dadurch gekennzeichnet, dass** der optische Detektor (9, 10, 15, 16) eine erste Kamera (9) umfasst, die an dem ringförmigen Förder-Mechanismus (3) angeordnet ist, dem anderen Ende (2a) des Schrumpfschlauchs (2) zugewandt und so ausgeführt ist, dass sie einen ersten Defekt an dem erhitzten und geschrumpften anderen Ende (2a) des Schrumpfschlauchs (2) prüft,
wobei die erste Kamera (9) dazu dient, einen exzentrischen Defekt eines Innenlochs des erhitzten und geschrumpften anderen Endes (2a) des Schrumpfschlauchs (2) zu prüfen.

6. Automatische Prüfplattform nach Anspruch 5,
**dadurch gekennzeichnet, dass**
die zweite Kamera (10) dazu dient, eine Durchmesser-Abweichung des Innenlochs des erwärmten und geschrumpften anderen Endes (2a) des Schrumpfschlauchs (2) und Verunreinigungen zu prüfen, die an einer Innenwand des erhitzten und geschrumpften anderen Endes (2a) des Schrumpfschlauchs (2) anhaften.

7. Automatische Prüfplattform nach Anspruch 6, die des Weiteren umfasst:
eine zweite Drück-Platte (14), die so ausgeführt ist, dass sie den Zustands-Umschaltknopf (12) drückt,
wobei, nachdem der Schrumpfschlauch (2) von der ersten Kamera (9) und der zweiten Kamera (10) geprüft worden ist, die zweite Drück-Platte (14) den Zustands-Umschaltknopf (12) drückt, um den Halter (5) von dem geschlossenen Zustand in den geöffneten Zustand umzuschalten, so dass der Schrumpfschlauch (2) von dem Halter (5) abfällt.

8. Automatische Prüfplattform nach Anspruch 7,
**dadurch gekennzeichnet, dass** der Schrumpfschlauch (2) so eingerichtet ist, dass er auf zwei benachbarten Rollen (22) aufliegt, und
wobei nach Drücken des Zustands-Umschaltknopfes (12) durch die zweite Drück-Platte (14) der Schrumpfschlauch (2) von dem Halter (5) abfällt und an eine Position zwischen einer ersten Rolle (22) und einer zweiten Rolle (22) des Roll-Mechanismus (13, 21, 22, 22a) geführt und auf die erste und die zweite Rolle (22, 22) aufgelegt wird, die zueinander benachbart sind;
und der von dem Halter (5) abgefallene Schrumpfschlauch (2) von einer Führungshülse (17) zu der ersten Prüfposition zwischen der ersten Rolle (22) und der zweiten Rolle (22) geführt wird.

9. Automatische Prüfplattform nach Anspruch 8,
**dadurch gekennzeichnet, dass** die dritte Kamera (15) dazu dient, eine Längen-Abweichung des erhitzten und geschrumpften anderen Endes (2a) des Schrumpfschlauchs (2), eine Gesamtlängen-Abweichung des Schrumpfschlauchs (2), einen Verformungs-Defekt des Schrumpfschlauchs (2) oder andere Defekte zu prüfen, die Löcher, Vertiefungen, Brandflecken, Kratzer oder Abdrücke an einer Außenumfangsfläche des Schrumpfschlauchs (2) einschließen.

10. Automatische Prüfplattform nach Anspruch 9,
**dadurch gekennzeichnet, dass** der optische Detektor (9, 10, 15, 16) des Weiteren eine vierte Kamera (16) umfasst, die an dem Roll-Mechanismus (13, 21, 22, 22a) angeordnet ist, den Endflächen der Rollen (22) zugewandt und so ausgeführt ist, dass sie einen Defekt an dem einen Ende des auf zwei benachbarten Rollen (22) aufliegenden Schrumpfschlauchs (2) prüft;
wobei die vierte Kamera (16) dazu dient, Vertiefungen in einer Innenwand des nicht erhitzten und nicht geschrumpften einen Endes (2b) des Schrumpfschlauchs (2) sowie eine Innendurchmesser-Abweichung des nicht erhitzten und nicht geschrumpften einen Endes (2b) des Schrumpfschlauchs (2) zu prüfen.

11. Automatische Prüfplattform nach Anspruch 10,
**dadurch gekennzeichnet, dass** die Antriebsvorrichtung (13, 21, 22a) umfasst:
eine Vielzahl von Schneckenrädern (22a), die jeweils mit den Rollen (22) verbunden sind;
eine Schnecke (13), die mit der Vielzahl von Schneckenrädern (22a) in Eingriff ist; und
einen Motor (21), der so ausgeführt ist, dass er die Schnecke (13) rotierend antreibt,
wenn die Schnecke (13) von dem Motor (21) gedreht wird, die Schnecke (13) die Schneckenräder (22a) rotierend antreibt, die Schneckenräder (22a) die Rollen (22) rotierend antreiben, und die Rollen (22) den darauf aufliegenden Schrumpfschlauch (2) rotierend antreiben.

12. Automatische Prüfplattform nach Anspruch 11, die des Weiteren umfasst:
einen sich bewegenden Träger (7), der so ausgeführt ist, dass er den Schrumpfschlauch (2), der durch die dritte und vierte Kamera (15, 16) geprüft worden ist, zu einer Abgabe-Position bewegt und den Schrumpfschlauch (2), der durch die dritte und vierte Kamera (15, 16) geprüft wird, zu Prüf-Positionen zwischen den Rollen (22) überführt.

13. Automatische Prüfplattform nach Anspruch 12,
**dadurch gekennzeichnet, dass** die Vielzahl von Rollen (22) des Roll-Mechanismus (13, 21, 22, 22a) die erste Rolle (22), die zweite Rolle (22), eine dritte Rolle (22) und eine vierte Rolle (22) umfasst, die parallel in einer Reihe von einer Seite zu der anderen Seite angeordnet sind;
wobei eine erste Prüf-Position zwischen der ersten Walze (22) und der zweiten Walze (22) definiert ist, eine zweite Prüf-Position zwischen der zweiten Walze (22) und der dritten Walze (22) definiert ist und eine dritte Prüf-Position zwischen der dritten Walze (22) und der vierten Walze (22) definiert ist; und
der sich bewegende Träger (7) so eingerichtet ist, dass er den an der ersten Prüf-Position zwischen der ersten und zweiten Walze (22, 22) aufliegenden Schrumpfschlauch (2) aufeinanderfolgend zu der zweiten Prüf-Position, der dritten Prüf-Position und der vierten Prüf-Position befördert;
wobei der an der ersten Prüf-Position aufliegende Schrumpfschlauch (2) in einer ersten Winkelstellung positioniert ist;
der an der zweiten Prüf-Position aufliegende Schrumpfschlauch (2) aus der ersten Winkelstellung in eine zweite Winkelstellung gedreht wird;
der an der dritten Prüf-Position aufliegende Schrumpfschlauch (2) aus der zweiten Winkelstellung in eine dritte Winkelstellung gedreht wird;
der Schrumpfschlauch (2) aufgrund der Schwerkraft automatisch von dem sich bewegenden Träger (7) abfällt, wenn der Schrumpfschlauch (2) an die Abgabe-Position bewegt wird;
und eine Winkeldifferenz zwischen der ersten Winkelstellung und der zweiten Winkelstellung 120° beträgt, und eine Winkeldifferenz zwischen der zweiten Winkelstellung und der dritten Winkelstellung 120° beträgt.

14. Automatische Prüfplattform nach Anspruch 13,
**dadurch gekennzeichnet, dass** der sich bewegende Träger (7) eine Basis und zwei stützende Seitenwände (7a, 7a) umfasst, die an beiden Seiten der Basis vorhanden sind, wobei die stützende Seitenwand (7a) mit Schlitzen (7b) versehen ist, und
die Rollen (22) zwischen den zwei stützenden Seitenwänden (7a, 7a) angeordnet sind, und beide Enden (2a, 2b) des Schrumpfschlauchs (2) so eingerichtet sind, dass sie in Schlitzen (7b) der zwei stützenden Seitenwände (7a) aufgenommen und gelagert sind.

15. Automatische Prüfplattform nach Anspruch 14,
**dadurch gekennzeichnet, dass** der Roll-Mechanismus (13, 21, 22, 22a) des Weiteren ein Halteelement (26) umfasst, das so ausgeführt ist, dass es den Schrumpfschlauch (2) an der ersten Prüf-Position , der zweiten Prüf-Position und der dritten Prüf-Position hält, um zu verhindern, dass der Schrumpfschlauch (2) von den Rollen (22) abfällt;
wobei das Halteelement (26) ein stützendes Plattenteil umfasst, die stützende Platte den anderen Enden der Rollen (22) zugewandt ist, die nach unten geneigt sind, um das andere Ende (2a) des Schrumpfschlauchs (2) zu tragen, das nach unten geneigt ist.

16. Automatische Prüfplattform nach Anspruch 4, die des Weiteren umfasst:
eine Beurteilungsvorrichtung, die so ausgeführt ist, dass sie auf Basis von Prüfergebnissen des optischen Detektors (9, 10, 15, 16) feststellt, ob der geprüfte Schrumpfschlauch (2) geeignet ist; sowie
einen Sortier-Mechanismus (23), der so ausgeführt ist, dass er den geeigneten Schrumpfschlauch (2) in einen ersten Aufnahmebehälter (24a) legt und den nicht geeigneten Schrumpfschlauch (2) in einen zweiten Aufnahmebehälter (24b) legt.

17. Automatische Prüfplattform nach Anspruch 16,
**dadurch gekennzeichnet, dass** der Sortier-Mechanismus (23) umfasst:
einen Durchlass (23c), der sich unterhalb des sich bewegenden Trägers (7) befindet und so ausgeführt ist, dass er den von dem beweglichen Träger (7) abgefallenen Schrumpfschlauch (2) aufnimmt;
einen ersten Abzweig-Durchlass (23a), der selektiv mit dem Durchlass (23c) in Verbindung steht und sich in den ersten Aufnahmebehälter (24a) hinein erstreckt;
einen zweiten Abzweig-Durchlass (23a), der selektiv mit dem Durchlass (23c) in Verbindung steht und sich in den zweiten Aufnahmebehälter (24a) hinein erstreckt;
einen Verschluss (23d), der so ausgeführt ist, dass er entsprechend dem Beurteilungsergebnis der Beurteilungsvorrichtung selektiv den ersten Abzweig-Durchlass (23a) oder den zweiten Abzweig-Durchlass (23b) schließt,
wobei, wenn der Schrumpfschlauch (2) als ein geeignetes Produkt bestimmt wird, der Verschluss (23d) den zweiten Abzweig-Durchlass (23b) schließt und den ersten Abzweig-Durchlass (23a) öffnet, so dass der geeignete Schrumpfschlauch (2) über den ersten Abzweig-Durchlass (23a) in den ersten Aufnahmebehälter (24a) hinein geführt wird,
wobei, wenn der Schrumpfschlauch (2) als ein nicht geeignetes Produkt bestimmt wird, der Verschluss (23d) den ersten Abzweig-Durchlass (23a) schließt und den zweiten Abzweig-Durchlass (23b) öffnet, so dass der nicht geeignete Schrumpfschlauch (2) über den zweiten Abzweig-Durchlass (23b) in den zweiten Aufnahmebehälter (24b) hinein geführt wird.

18. Automatische Prüfplattform nach Anspruch 17,
**dadurch gekennzeichnet, dass** der Schrumpfschlauch (2) aufgrund seiner Schwerkraft automatisch von dem sich bewegenden Träger (7) in den Durchlass (23c) hinein abfällt, wenn der Schrumpfschlauch (2) zu der Abgabe-Position befördert wird, und aufgrund seiner Schwerkraft automatisch über den ersten Abzweig-Durchlass (23a) oder den zweiten Abzweig-Durchlass (23b) in den ersten Aufnahmebehälter (24a) oder den zweiten Aufnahmebehälter (24b) hinein gleitet.

## Revendications

1. Plate-forme d'inspection automatique comprenant :
un mécanisme d'alimentation (1) configuré pour délivrer un élément tubulaire (2) à inspecter,
un détecteur de vision (9, 10, 15, 16) configuré pour inspecter des défauts de l'élément tubulaire (2), et
un mécanisme de transport (3, 22) configuré pour transporter l'élément tubulaire (2) vers un emplacement d'inspection par vision de sorte à inspecter l'élément tubulaire (2) au moyen du détecteur de vision (9, 10, 15, 16), l'élément tubulaire (2) étant un tube thermorétractable,
**caractérisé en ce que** la plate-forme d'inspection automatique comprend en outre un mécanisme de saisie (4, 5) configuré pour enserrer une première extrémité (2b) du tube thermorétractable (2),
un mécanisme de chauffage (8) configuré pour chauffer l'autre extrémité (2a) du tube thermorétractable (2) de sorte à ce que l'autre extrémité (2a) du tube thermorétractable (2) soit rétractée, le mécanisme de transport (3, 22) comprenant un mécanisme de transport annulaire (3) configuré pour transporter le mécanisme de saisie (4, 5) et le tube thermorétractable (2) enserré sur le mécanisme de saisie (4, 5),
dans laquelle le détecteur de vision (9, 10, 15, 16) comprend un premier appareil de prise de vues (9) situé au niveau du mécanisme de transport annulaire (3), disposé pour faire face à l'autre extrémité (2a) du tube thermorétractable (2) et configuré pour inspecter un premier défaut sur l'autre extrémité (2a) chauffée et rétractée du tube thermorétractable (2),
dans laquelle le détecteur de vision (9, 10, 15, 16) comprend en outre un deuxième appareil de prise de vues (10) situé au niveau du mécanisme de transport annulaire (3), disposé pour faire face à l'autre extrémité (2a) du tube thermorétractable (2) et configuré pour inspecter un second défaut sur l'autre extrémité (2a) chauffée et rétractée du tube thermorétractable (2),
et dans laquelle le mécanisme de transport (3, 22) comprend en outre un mécanisme roulant (13, 21, 22, 22a),
le mécanisme roulant (13, 21, 22, 22a) comprenant une pluralité de rouleaux (22) agencés selon une rangée et espacés l'un de l'autre, les rouleaux (22) étant conçus pour faire tourner le tube thermorétractable (2) supporté sur ceux-ci à différentes positions angulaires de sorte à ce qu'un troisième appareil de prise de vues (15) puisse inspecter la surface périphérique externe du tube thermorétractable (2) dans sa totalité, ainsi qu'un dispositif d'entraînement (13, 21, 22a) configuré pour entraîner la pluralité de rouleaux (22) à rouler, le détecteur de vision (9, 10, 15, 16) comprenant en outre le troisième appareil de prise de vues (15) situé au niveau du mécanisme roulant (13, 21, 22, 22a) disposé pour faire face aux surfaces périphériques externes des rouleaux (22) et configuré pour inspecter un défaut sur la surface périphérique externe du tube thermorétractable (2) supporté sur deux rouleaux (22) adjacents.

2. Plate-forme d'inspection automatique selon la revendication 1,
**caractérisée en ce que** le mécanisme de saisie (4, 5) comprend :
une plaque d'installation (4) dont une première extrémité est montée sur le mécanisme de transport annulaire (3), configurée pour se déplacer avec le mécanisme de transport annulaire (3), et
un agencement (5) monté sur l'autre extrémité de la plaque d'installation (4) et configuré pour être ouvert ou fermé de sorte à saisir ou à libérer le tube thermorétractable (2).

3. Plate-forme d'inspection automatique selon la revendication 2,
**caractérisée en ce que** le mécanisme de saisie (4, 5) comprend en outre un bouton de basculement d'état (12),
lorsque le bouton de basculement d'état (12) est pressé, l'agencement (5) bascule de l'état fermé à l'état ouvert de sorte à ce que le tube thermorétractable (2) puisse être inséré dans l'agencement (5), et
lorsque le bouton de basculement d'état (12) est relâché, l'agencement (5) bascule de l'état ouvert à l'état fermé de sorte à immobiliser le tube thermorétractable (2) sur l'agencement (5).

4. Plate-forme d'inspection automatique selon la revendication 3, comprenant en outre :
une première plaque de pressage (100) configurée pour presser le bouton de basculement d'état (12),
dans laquelle, pendant l'insertion du tube thermorétractable (2) dans l'agencement (5), la première plaque de pressage (20) presse le bouton de basculement d'état (12) de sorte à ce que le tube thermorétractable (2) soit inséré dans l'agencement (5), et
dans laquelle, après l'insertion du tube thermorétractable (2) dans l'agencement (5), la première plaque de pressage () relâche le bouton de basculement d'état (12) de sorte à immobiliser le tube thermorétractable (2) sur l'agencement (5).

5. Plate-forme d'inspection automatique selon la revendication 4,
**caractérisée en ce que** le détecteur de vision (9, 10, 15, 16) comprend un premier appareil de prise de vues (9) situé au niveau du mécanisme de transport annulaire (3) disposé pour faire face à l'autre extrémité (2a) du tube thermorétractable (2) et configuré pour inspecter un premier défaut sur l'autre extrémité (2a) chauffée et rétractée du tube thermorétractable (2),
dans laquelle le premier appareil de prise de vues (9) est utilisé pour inspecter un défaut excentré d'un alésage interne de l'autre extrémité (2a) chauffée et rétractée du tube thermorétractable (2).

6. Plate-forme d'inspection automatique selon la revendication 5,
**caractérisée en ce que** le deuxième appareil de prise de vues (10) est utilisé pour inspecter un écart de diamètre de l'alésage interne de l'autre extrémité (2a) chauffée et rétractée du tube thermorétractable (2) ainsi que des contaminants fixés sur la paroi interne de l'autre extrémité (2a) chauffée et rétractée du tube thermorétractable (2).

7. Plate-forme d'inspection automatique selon la revendication 6, comprenant en outre :
une seconde plaque de pressage (14) configurée pour presser le bouton de basculement d'état (12),
où, après que le tube thermorétractable (2) a été inspecté par le premier appareil de prise de vues (9) et le deuxième appareil de prise de vues (10), la seconde plaque de pressage (14) presse le bouton de basculement d'état (12) de sorte à faire basculer l'agencement (5) de l'état fermé à l'état ouvert de sorte à ce que le tube thermorétractable (2) tombe de l'agencement (5).

8. Plate-forme d'inspection automatique selon la revendication 7,
**caractérisée en ce que** le tube thermorétractable (2) est conçu pour être supporté sur deux rouleaux (22) adjacents, et
dans laquelle, après que le bouton de basculement d'état (12) a été pressé par la plaque de pressage (14), le tube thermorétractable (2) tombe de l'agencement (5) et est guidé vers un emplacement situé entre un premier rouleau (22) et un deuxième rouleau (22) du mécanisme roulant (13, 21, 22, 22a) et supporté sur les premier et deuxième rouleaux adjacents (22, 22),
dans laquelle le tube thermorétractable (2), tombé de l'agencement (5), est guidé par un manchon de guidage (17) vers le premier emplacement d'inspection situé entre le premier rouleau (22) et le deuxième rouleau (22).

9. Plate-forme d'inspection automatique selon la revendication 8,
**caractérisée en ce que** le troisième appareil de prise de (15) est utilisé pour inspecter un écart de longueur de l'autre extrémité (2a) chauffée et rétractée du tube thermorétractable (2), l'écart total de longueur du tube thermorétractable (2), un défaut de déformation du tube thermorétractable (2) ou d'autres défauts incluant des trous, des cuvettes, des marques de brûlures, des rayures ou des empreintes sur la surface périphérique externe du tube thermorétractable (2).

10. Plate-forme d'inspection automatique selon la revendication 9,
**caractérisée en ce que** le détecteur de vision (9, 10, 15, 16) comprend en outre un quatrième appareil de prise de (16) situé au niveau du mécanisme roulant (13, 21, 22, 22a) disposé pour faire face aux surfaces d'extrémité des rouleaux (22) et configuré pour inspecter un défaut sur la première extrémité du tube thermorétractable (2) supporté sur deux rouleaux (22) adjacents,
dans laquelle le quatrième appareil de prise de vues (16) est utilisé pour inspecter des cuvettes dans la paroi interne de la première extrémité (2b) non chauffée et non rétractée du tube thermorétractable (2) ainsi que l'écart de diamètre interne de la première extrémité (2b) non chauffée et non rétractée du tube thermorétractable (2).

11. Plate-forme d'inspection automatique selon la revendication 10,
**caractérisée en ce que** le dispositif d'entraînement (13, 21, 22a) comprend :
une pluralité de roues à vis sans fin (22a) respectivement reliées aux rouleaux (22),
une vis sans fin (13) en prise avec la pluralité de roues à vis sans fin (22a), et
un moteur (21) configuré pour entraîner la vis sans fin (13) à tourner,
lorsque la vis sans fin (13) est mise en rotation par le moteur (21), la vis sans fin (13) entraîne les roues à vis sans fin (22a) à tourner, les roues à vis sans fin (22a) entraînent les rouleaux (22) à tourner, et les rouleaux (22) entraînent le tube thermorétractable (2) supporté sur ceux-ci à tourner.

12. Plate-forme d'inspection automatique selon la revendication 11, comprenant en outre :
un support mobile (7) configuré pour déplacer le tube thermorétractable (2) qui a été inspecté par les troisième et quatrième appareils de prise de vues (15, 16) jusqu'à un emplacement de déchargement, ainsi que pour transférer le tube thermorétractable (2) qui est inspecté par les troisième et quatrième appareils de prise de vues (15, 16) vers des emplacements d'inspection situés entre les rouleaux (22).

13. Plate-forme d'inspection automatique selon la revendication 12,
**caractérisée en ce que** la pluralité de rouleaux (22) du mécanisme roulant (13, 21, 22, 22a) comprend le premier rouleau (22), le deuxième rouleau (22), un troisième rouleau (22) et un quatrième rouleau (22) disposés parallèlement en une rangée d'un côté à l'autre,
dans laquelle un premier emplacement d'inspection est défini entre le premier rouleau (22) et le deuxième rouleau (22), un deuxième emplacement d'inspection est défini entre le deuxième rouleau (22) et le troisième rouleau (22) et un troisième emplacement d'inspection est défini entre le troisième rouleau (22) et le quatrième rouleau (22), et
dans laquelle le support mobile (7) est conçu pour transporter le tube thermorétractable (2) supporté sur le premier emplacement d'inspection entre les premier et deuxième rouleaux (22, 22) successivement vers le deuxième emplacement d'inspection, le troisième emplacement d'inspection et le quatrième emplacement d'inspection,
dans laquelle le tube thermorétractable (2) supporté sur le premier emplacement d'inspection est placé à une première position angulaire,
dans laquelle le tube thermorétractable (2) supporté sur le deuxième emplacement d'inspection est tourné de la première position angulaire jusqu'à une deuxième position angulaire,
dans laquelle le tube thermorétractable (2) supporté sur le troisième emplacement d'inspection est tourné de la deuxième position angulaire jusqu'à une troisième position angulaire,
dans laquelle le tube thermorétractable (2) tombe automatiquement du support mobile (7) en raison de la gravité lorsque le tube thermorétractable (2) est déplacé vers l'emplacement de déchargement,
dans laquelle la différence d'angle entre la première position angulaire et la deuxième position angulaire est égale à 120 degrés et la différence d'angle entre la deuxième position angulaire et la troisième position angulaire est égale à 120 degrés.

14. Plate-forme d'inspection automatique selon la revendication 13,
**caractérisée en ce que** le support mobile (7) comprend une base et deux parois latérales de support (7a, 7a) disposées aux deux extrémités de la base, la paroi de support (7a) étant formée de rainures (7b), et
dans laquelle les rouleaux (22) sont situés entre les deux parois latérales de support (7a, 7a), et les deux extrémités (2a, 2b) du tube thermorétractable (2) sont conçues pour être reçues et supportées dans des rainures (7b) des deux parois latérales de support (7a).

15. Plate-forme d'inspection automatique selon la revendication 14,
**caractérisée en ce que** le mécanisme roulant (13, 21, 22, 22a) comprend en outre un élément de maintien (26) configuré pour maintenir le tube thermorétractable (2) au niveau du première emplacement d'inspection, du deuxième emplacement d'inspection et du troisième emplacement d'inspection de sorte à empêcher le tube thermorétractable (2) de tomber des rouleaux (22),
dans laquelle l'élément de soutien (26) comprend une pièce de plaque de support, la plaque de support étant disposée pour faire face aux autres extrémités des rouleaux (22) qui sont inclinées vers le bas de sorte à supporter l'autre extrémité (2a) du tube thermorétractable (2) qui est inclinée vers le bas.

16. Plate-forme d'inspection automatique selon la revendication 4, comprenant en outre :
un dispositif d'évaluation configuré pour déterminer si le tube thermorétractable (2) inspecté est qualifié sur la base des résultats d'inspection du détecteur de vision (9, 10, 15, 16), et
un mécanisme de tri (23) configuré pour placer le tube thermorétractable (2) qualifié dans un premier réceptacle d'accueil (24a) et pour placer le tube thermorétractable (2) non qualifiée dans un second réceptacle d'accueil (24b).

17. Plate-forme d'inspection automatique selon la revendication 16,
**caractérisée en ce que** le mécanisme de tri (23) comprend :
un passage (23c) situé en dessous du support mobile (7) et configuré pour recevoir le tube thermorétractable (2) tombé du support mobile (7),
un premier passage de branchement (23a) en communication sélective avec le passage (23c) et se déployant dans le premier réceptacle d'accueil (24a),
un second passage de branchement (23b) en communication sélective avec le passage (23c) et se déployant dans le second réceptacle d'accueil (24b), et
un obturateur (23d) configuré pour fermer sélectivement le premier passage de branchement (23a) ou le second passage de branchement (23b) en fonction du résultat d'évaluation du dispositif d'évaluation,
dans laquelle, lorsqu'il est déterminé que le tube thermorétractable (2) est un produit qualifié, l'obturateur (23d) ferme le second passage de branchement (23b) et ouvre le premier passage de branchement (23a) de sorte à ce que le tube thermorétractable (2) qualifié soit guidé dans le premier réceptacle d'accueil (24a) au travers du premier passage de branchement (23a),
dans laquelle, lorsqu'il est déterminé que le tube thermorétractable (2) est un produit non qualifié, l'obturateur (23d) ferme le premier passage de branchement (23a) et ouvre le second passage de branchement (23b) de sorte à ce que le tube thermorétractable (2) non qualifié soit guidé dans le second réceptacle d'accueil (24b) au travers du second passage de branchement (23b).

18. Plate-forme d'inspection automatique selon la revendication 17,
**caractérisée en ce que** le tube thermorétractable (2) tombe automatiquement du support mobile (7) sous l'effet de la gravité dans le passage (23c) lorsque le tube thermorétractable (2) est transporté vers l'emplacement de déchargement, et il glisse automatiquement sous l'effet de la gravité dans le premier réceptacle d'accueil (24a) ou le second réceptacle d'accueil (24b) au travers du premier passage de branchement (23a) ou du second passage de branchement (23b).
